# EUROPÄISCHE PATENTSCHRIFT

(11) **EP 1 303 805 B1**
(45) Veröffentlichungstag und Bekanntmachung des Hinweises auf die Patenterteilung: **10.02.2010**
(21) Anmeldenummer: 01949176.0
(22) Anmeldetag: 20.07.2001
(51) Int. Cl.: G06F 3/023, G06F 3/033, G06F 3/048

(54) **VERFAHREN FÜR EIN SCHNELLSCHREIBSYSTEM UND SCHNELLSCHREIBGERÄT**
METHOD FOR A HIGH-SPEED WRITING SYSTEM AND HIGH-SPEED WRITING DEVICE
PROCEDE D'UN SYSTEME D'ENREGISTREMENT RAPIDE ET APPAREIL D'ENREGISTREMENT RAPIDE

(30) Priorität: 21.07.2000 CH 145000
(43) Veröffentlichungstag der Anmeldung: 23.04.2003
(73) Patentinhaber: Speedscript AG, 8002 Zürich (CH)
(72) Erfinder: Bachmann, Raphael, 8002 Zürich (CH)
(74) Vertreter: Betten & Resch
(86) Internationale Anmeldenummer: PCT/CH2001/000453
(87) Internationale Veröffentlichungsnummer: WO 2002/008882

(56) Entgegenhaltungen:
- EP-A- 0 660 218
- US-A- 6 031 525

## Beschreibung

Die vorliegende Erfindung betrifft ein Verfahren für ein Schnellschreibsystem mit Menüauswahl über Stift und Touchscreen gemäss Patentanspruch 1 und ein Schnellschreibgerät zur Durchführung dieses Verfahrens gemäss Patentanspruch 22.

Die Miniaturisierung elektronischer Geräte macht weiterhin grosse Fortschritte und ermöglicht neue mobile Anwendungen, so z.B. SMS (Short Message System) und WAP (Wireless Application Protocol). Die Vorteile, die diese Entwicklung bringt, werden jedoch von Nachteilen wie mangelnder Ergonomie und kleiner unübersichtlicher Bildschirme begleitet. Ein grosses Problem ist immer noch die Eingabe von Text.

Die mündliche Spracherkennung ist schon weiterentwickelt als die Handschrifterkennung. Trotzdem ist eine lautlose Form der Texteingabe der mündlichen in vielen Fällen vorzuziehen wie etwa in öffentlichen Verkehrsmitteln, in öffentlichen Räumen und Grossraumbüros, zur Wahrung der Privatsphäre und der Diskretion.

Das bekannteste Mittel zur Texteingabe ist eine Tastatur, allen voran die QWERTY-Tastatur. Tastaturen sind darauf ausgerichtet, mit den Fingern bedient zu werden. Deshalb können sie nur auf ca. 24 x 8 cm verkleinert werden, falls die Möglichkeit bestehen soll im Zehnfingersystem zu schreiben. Es gibt auch Geräte mit wesentlich kleineren QWERTY-Tastaturen, obwohl auf denen nicht im Zehnfingersystem geschrieben werden kann. Das ist nicht wirklich sinnvoll, weil es für das Einfingersystem bessere, übersichtlichere Tastatur-Layouts gibt, bei welchen mit dem Finger weniger Weg zurückgelegt wird.

Obwohl es schon seit Langem erwiesenermassen effizientere, einfacher erlernbare Tastatur-Layouts gibt, ist die QWERTY-Tastaturzum Standard geworden (M. Helander (ed.), Handbook of Human-Computer Interaction, Elsevier (1988), S. 475-479).

Als Zusatzgeräte für Mobiltelefone (SMS) werden Mini-QWERTY-Tastaturen angeboten, die gleich gross und voluminös wie das Mobiltelefon selbst sind. Für Palmtop -Anwendungen mit Touchscreen gibt es Zusatztastaturen in normaler Grösse (ein Produkt ist faltbar). Eine solche Tastatur ist etwa viermal so voluminös wie der Palmtop selbst. Ein Ansatz wie in diesen Beispielen beschrieben, läuft der Idee der Miniaturisierung entgegen und zeigt den Bedarf für neue Geräte mit neuen Text-Eingabeverfahren auf.

Bei Tastaturen für Mobiltelefone sind die Tasten noch zusätzlich mit drei Buchstaben besetzt. Durch mehrmaliges, kurz aufeinanderfolgendes Betätigen einer Taste wird einer der drei Buchstaben eingegeben. Das ist eine ziemlich platzsparende aber sehr arbeitsintensive und langsame Form der Texteingabe. Begeisterte SMS-Schreiber zeigen eine erstaunliche Bereitschaft, diese Form der Dateneingabe zu perfektionieren.

Ein sehr ähnliches, verbessertes Gerät (Nokia Mobile Phones Ltd., Salo, Finnland) verlangt ein nur einmaliges Antippen der Tasten obwohl auch diese mehrfach besetzt sind. Mit Hilfe eines gespeicherten Wörterbuchs erkennt das Gerät trotzdem, welches Wort gemeint ist. Falls ein einzugebendes Wort im Wörterbuch nicht enthalten ist und wenn das Gerät mehrere mögliche Wörter erkennt, muss der Schreibende in einem Menü das gemeinte Wort wählen, was vom eigentlichen Schreibprozess ablenkt und diesen sogar unterbricht, wenn im Menü das gesuchte Wort nicht dargestellt wird.

Ein Ansatz, um die Eingabe von Text zu verbessern, ist die Verwendung von sogenannten Touchscreen-Monitoren, weil diese als Eingabe- und Monitorfläche dienen und somit der knappe Platz optimal genutzt wird. Geräte mit Touchscreen-Monitor ohne Tastatur sind demnach eine interessante Alternative.

Es gibt derartige Geräte, die eine Tastatur anzeigen (üblicherweise QWERTY), auf welcher mit einem Stift Schaltflächen angetippt werden. Im Grunde funktionieren sie gleich wie die schon beschriebenen Palmtop-Anwendungen (PSION Computers PLC) mit Tastatur. Sogar wenn die Tastatur für den Stiftgebrauch (Einfingersystem) optimiert ist, muss für jeden Buchstaben eine "Taste" angezeigt werden, was zusätzlich Platz benötigt und es muss jeder Buchstabe einzeln getippt werden, was viele Bewegungen mit dem Stift zur Folge hat und die Fehleranfälligkeit erhöht.

Einige Touchscreen-Geräte bieten Handschrifterkennung an, aber leider funktioniert diese nicht optimal. Es gibt jene, die ganze Wörter zu entziffern versuchen und andere bei denen Buchstabe um Buchstabe handschriftlich eingegeben wird. Die Buchstaben müssen mit einem speziellen 'Graffiti'-Alphabet (U.S. Robotics, Palm Computing Division, Los Altos, California U.S.A.) eingegeben werden. Die Handschrift wird vom Gerät häufig falsch gedeutet, was zur Folge hat, dass der Benutzer vom eigentlichen Schreibprozess abgelenkt wird. Ein weiteres Problem dieser Geräte ist die aufwändige Programmierung, die Speicherplatz und Rechenkapazitäten benötigt, mit der Folge, dass der eingegebene Text verzögert angezeigt wird. Bei häufiger Verwendung kann es zu Veränderungen der persönlichen Handschrift kommen.

Beim Schreiben auf Papier benötigt man eine Unterlage und muss zudem die Hand führen, was bei beschränkten Platzverhältnissen erschwerend wirkt. Bei der normalen Handschrift (Langschrift) müssen mit der Hand viele Bewegungen ausgeführt werden, weshalb mit einer Kurzschrift, wie z.B. einer Stenografie nach Stolze/Schrey (Alge /Reber/Zürcher, Lehrbuch der deutschen Stenografie, 105. Auflage 1994) schneller geschrieben werden kann. Allerdings müssen dazu neue Zeichen, Kürzel für Wörter und eine verkürzte, orthographisch falsche Schreibweise gelernt werden. Um Stenografie lesen zu können muss ebenfalls ein grosser Lernaufwand betrieben werden.

Nach US 6,008,799 ist ein Texteingabesystem bekannt, das einen Touchscreen verwendet. Dabei werden alle Buchstaben und die häufigsten Wörter als Tasten angezeigt, wofür 92 Tasten benötigt werden. Die Tasten sind alphabetisch geordnet, was einer häufigkeitsmässigen Anordnung erwiesenermassen unterlegen ist (M. Helander (ed.), Handbook of Human-Computer Interaction, Elsevier (1988), S. 479). Zusätzlich wird auch eine Wörterbuchliste angezeigt. Auf einem Monitor werden ca. 12 x 20 cm belegt, was die Anwendungen im Desktop- und Laptopbereich empfindlich eingrenzt. Zusätzlich zu den Tasten können die Vokale auch mit sogenannten 'Flicks', bzw. Strichrichtungen, eingegeben werden. Nachteilig ist, dass nur vier Flicks vorgesehen sind (nach links, rechts, oben und unten), weshalb der Buchstabe 'U' nicht mit einem Flick eingegeben werden kann. Eine saubere Systematik wird dadurch verunmöglicht. Durch die Vielzahl von Tasten wirkt der Layout unübersichtlich und demzufolge schwierig zu merken. Der Benützer muss mit dem Griffel weite Wege zurücklegen, um die richtigen Tasten zu betätigen, was viel Zeit kostet. Das Wörterbuchfenster, in welchem je nach Fall noch gescrollt werden muss, erfordert zusätzliche Aufmerksamkeit und lenkt vom eigentlichen Schreibprozess ab. Es ist nicht vorgesehen, dass Flicks verbunden, resp. aneinandergereiht werden.

EP 0660218 B1 offenbart eine Benutzerschnittstellenvorrichtung für ein Rechnersystem gemäß Oberbegriff von Anspruch 1, welches eine Anzeigevorrichtung zum Anzeigen einer graphischen Tastaturabbildung, eine Eingabequelle, die ein Zeigegerät umfaßt, wobei die Eingabequelle eine Eingabegröße bereitstellt, die Tasteninformation umfaßt, welche einer Taste entspricht, die auf der graphischen Tastaturabbildung durch das Zeigegerät und eine Radinformation, die mindestens einer Verschiebungsrichtung des Zeigegerätes auf der graphischen Tastaturabbildung entspricht, bezeichnet wird, und einem Ausgangsgenerator umfasst, welcher auf die von der Eingangsquelle bereitgestellte Pfadinformation reagiert, indem er ein Ausgabezeichen definierende Tastencodedaten erzeugt, indem ein der Pfadinformation entsprechender Modifikator auf ein der Tasteninformation entsprechendes Eingangszeichen angewendet wird, und der Modifikator anhand der mindestens einen Verschiebungsrichtung bestimmt wird. Die Darstellung einer graphischen Tastaturabbildung ist unübersichtlich und beispielsweise für Geräte mit begrenzter Anzeigevorrichtung (z.B. Mobiltelefone, PDA) ungeeignet. Die Bedienbarkeit der Benutzerschnittstellenvorrichtung ist auf Grund des unübersichtlichen Layouts und den damit verbundenen großen Abständen zwischen einzelnen Tasten erschwert.

Aufgabe der vorliegenden Erfindung ist es daher, unter Vermeidung der erwähnten Nachteile ein Verfahren für ein Schnellschreibsystem anzugeben.
Eine weitere Aufgabe ist es, ein Schnellschreibgerät mit Menüauswahl über Stift und Touchscreen zur Durchführung des Verfahrens zu beschreiben, das auch für mobile Anwendungen sehr geeignet ist.

Die Aufgabe wird gelöst durch ein Verfahren gemäss Patentanspruch 1 und ein Schnellschreibgerät gemäss Patentanspruch 15.

Das Verfahren und das dazugehörige Schnellschreibgerät werden im Folgenden beschrieben. Es zeigen:
- Fig. 1: Schematischer Aufbau für ein Schnellschreibgerät
- Fig. 2: Darstellung eines Eingabefeldes mit einer möglichen Häufigkeitsverteilung der Konsonanten für Deutsch
- Fig. 3: Darstellung eines Eingabefeldes mit einer möglichen Häufigkeitsverteilung der Konsonanten für Englisch
- Fig. 4: Strichrichtungen der Vokal-Taste mit Zuordnungen
- Fig. 5A-5N: Tastenfelder mit verschiedenen Wortbeispielen
- Fig. 6A-6D: Folge von Eingaben in englischer Sprache
- Fig. 7: Tabelle mit Double Tabs und Shortcuts 1. Art
- Fig. 8: Tabelle mit Double Tab Shortcuts
- Fig. 9: Tabelle für eine Zahleneingabe
- Fig. 10A-10B: Tabellen mit Menü-Fenster ab Vokal-Taste
- Fig. 11A-11B: Tabellen mit Menü-Fenster ab Z-Taste
- Fig. 12: Tabelle mit Menü-Fenster ab W-Taste
- Fig. 13: Flussdiagramm für das Eingabemodul
- Fig. 14: Übersichts-Flussdiagramm für das Verarbeitungsmodul
- Fig. 15-21: Weitere Flussdiagramme für das Verarbeitungsmodul
- Fig. 22: Ausführungsbeispiel für einen Stift
- Fig. 23A: Erstes Ausführungsbeispiel 'Palmtop'
- Fig. 23B: Zweites Ausführungsbeispiel 'Palmtop' mit wegdrehbarem Deckel
- Fig. 23C: Drittes Ausführungsbeispiel 'Palmtop' mit schräggestelltem Scharnier
- Fig. 24: Ausführungsbeispiel 'Uhr'
- Fig. 25A: Erstes Ausführungsbeispiel 'Laptop'
- Fig. 25B: Zweites Ausführungsbeispiel 'Laptop'

In der vorliegenden Erfindung werden folgende Begriffe definiert:
**1. Basic Moves** als ein erster Satz von Stiftbewegungen mit elementarem Charakter:
   **Tab:** Absetzen und Anheben des Stiftes am selben Ort.
   **Stroke:** Absetzen, einfache oder zusammengesetzte Stiftbewegung (ohne Absetzen) in einer der 8 Strichrichtungen und Anheben des Stiftes.
   **Shortcut 1. Art:** Absetzen auf einer Taste, Stiftbewegung in einer der 3 Strichrichtungen 'NACH OBEN' und Anheben des Stiftes.
   **Shortcut 2. Art:** Absetzen auf einer Taste, Stiftbewegung in einer der 3 Strichrichtungen 'NACH OBEN', Stiftbewegung in einer der 8 Strichrichtungen und Anheben des Stiftes.
   **Double Tab:** Absetzen, anheben und absetzen auf der selben Taste (innerhalb von kurzer Zeit) und Anheben des Stiftes, oder
      Absetzen, anheben und absetzen auf der selben Taste (innerhalb von kurzer Zeit), irgendeine Stiftbewegung und Anheben des Stiftes.
**2. Double Tab Shortcut** als ein zweiter Satz von Stiftbewegungen mit kombinatorischem Charakter: Diese starten immer im Vokalfeld, bzw. auf der Vokal-Taste mit Double Tab; danach wird immer irgendeine Taste gewählt, nämlich:
   - Double Tab auf Vokal-Taste, Double Tab auf irgendeiner Taste, oder
   - Double Tab auf Vokal-Taste, Tab auf irgendeiner Taste, oder
   - Double Tab auf Vokal-Taste, Stroke auf irgendeiner Taste.
**3. Neuner-Fenster:** Ein Menüfenster zum Auswählen. Ein Wort, Buchstabe, Buchstabenfolge oder Zeichen liegt im Zentrum; die anderen acht sind rundherum angeordnet.
**4. Achter-Fenster:** Ein Menüfenster zum Auswählen; es erscheint als Folge einer Auswahl beim Neuner-Fenster. Ein Wort, Buchstabe, Buchstabenfolge oder Zeichen liegt im Zentrum; die anderen sieben sind rundherum angeordnet.
**5. Dreier-Fenster:** Ein Menüfenster zum Auswählen. Ein Wort, Buchstabe, Buchstabenfolge oder Zeichen liegt im Zentrum, die anderen zwei liegen darüber. Es gibt drei verschiedene Kombinationen der darüberliegenden Fenster (rechts-oben und oben, rechts-oben und links-oben, oben und links-oben).
**6. Vierer-Fenster:** Ein Menüfenster zum Auswählen. Ein Wort, Buchstabe, Buchstabenfolge oder Zeichen liegt im Zentrum, die anderen drei liegen darüber.
**7. Fünfer-Fenster:** Ein Menüfenster zum Auswählen. Ein Wort, Buchstabe, Buchstabenfolge oder Zeichen liegt im Zentrum, drei liegen darüber und eines liegt halb verdeckt unter dem im Zentrum liegenden.

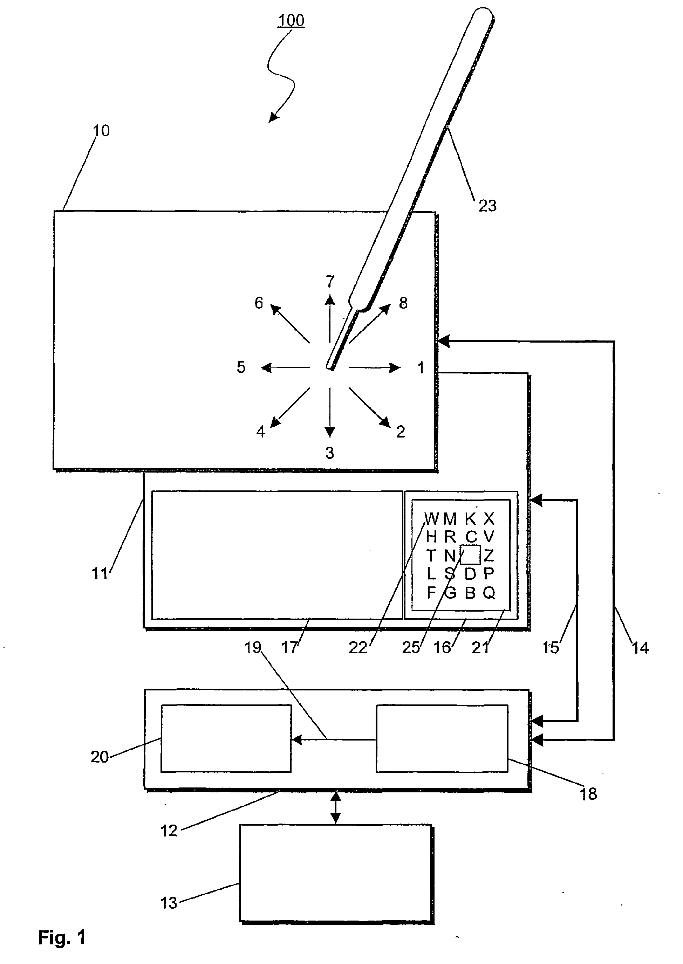

Fig. 1 zeigt den schematischen Aufbau für ein Schnellschreibgerät 100. In einem Gehäuse (nicht dargestellt) sind eine Eingabefläche 10, ein Monitor 11, eine Rechnereinheit 12, ein Speicher 13 und Leitungen 14, 15 untergebracht.
Die Eingabefläche 10 liegt über dem Monitor 11, ist transparent und weist eine berührungsempfindliche Oberfläche auf, auf der sich ein Eingabefeld 16 und ein Textfeld 17 befinden. Zusammen bilden sie einen Touchscreen bekannter Art.
Eingabefeld 16 und Textfeld 17 sind verschiebbar und in ihrer Grösse variabel auf dem Touchscreen in bekannter üblicher Fenstertechnik angeordnet. In einer bevorzugten Ausführung für Rechtshänder befindet sich das Textfeld links des Eingabefeldes.
Die Eingabefläche 10 ist über eine Leitung 14 mit der Rechnereinheit 12 verbunden, die ihrerseits in bekannter Weise mit einem Speicher 13 verbunden ist.
Andererseits ist die Rechnereinheit 12 über eine Leitung 15 mit dem Monitor 11 (z.B. LCD-Display) verbunden, über welche alle Informationen für den Bildaufbau des Textfeldes 17 gelangen.
In der Rechnereinheit 12 befindet sich ein Eingabemodul 18, das über eine weitere Leitung 19 mit einem Verarbeitungsmodul 20 verbunden ist. Über die Leitung 19 gelangt der interne Code in das Verarbeitungsmodul.
Das Eingabefeld 16 ist aufrufbar und in seiner Grösse variabel. Darin befindet sich ein in seiner Grösse ebenfalls variables Tastenfeld 21, das in einzelne Tasten, Konsonant-Tasten 22 und eine Vokal-Taste 25, aufgeteilt vorliegt. Mit einem von Hand geführten Stift 23 wird eine der Tasten 22, 25 angewählt, wobei eine Eingabe ausgelöst wird, so beispielsweise ein Schriftzeichen.
Im Weiteren werden mit dem Stift auf der Eingabefläche 10 Stiftbewegungen in acht ausgewählten, bzw. ausgezeichneten Strichrichtungen 1, 2, ..., 8 ausgeführt, auf deren Funktionen später eingegangen wird.
Über die Leitung 14 gelangen die x/y-Koordinaten der Berührungsstelle Stift-Touchscreen an die Rechnereinheit 12. Die Leitungen 14 und 15, sowie die Leitung 19 können auch als bidirektionale Leitungen ausgebildet sein.
Das erzeugte Schriftzeichen wird auf dem Textfeld 17 dargestellt, oder wenn kein Textfeld vorhanden ist, direkt in der Rechnereinheit 12 verarbeitet und im Speicher 13 gespeichert. Das Textfeld 17 kann fehlen, wenn es die knappen Platzverhältnisse nicht zulassen, wie z. B. bei der Integration des Schnellschreibgerätes in einer Uhr, wie später ein Ausführungsbeispiel beschrieben wird.
Der Stift 23 weist eine gerundete Spitze auf und lässt keine Schreibmöglichkeit im üblichen Sinn zu. Er dient zur Auswahl von Tasten oder der Anwahl von Feldern auf dem Touchscreen und zur Ausführung von Stiftbewegungen.
Eine zur Rechnereinheit 12 gehörende Software wird benötigt für die gesamte Verarbeitung der mittels Stift auf dem Tastenfeld getätigten Eingaben.

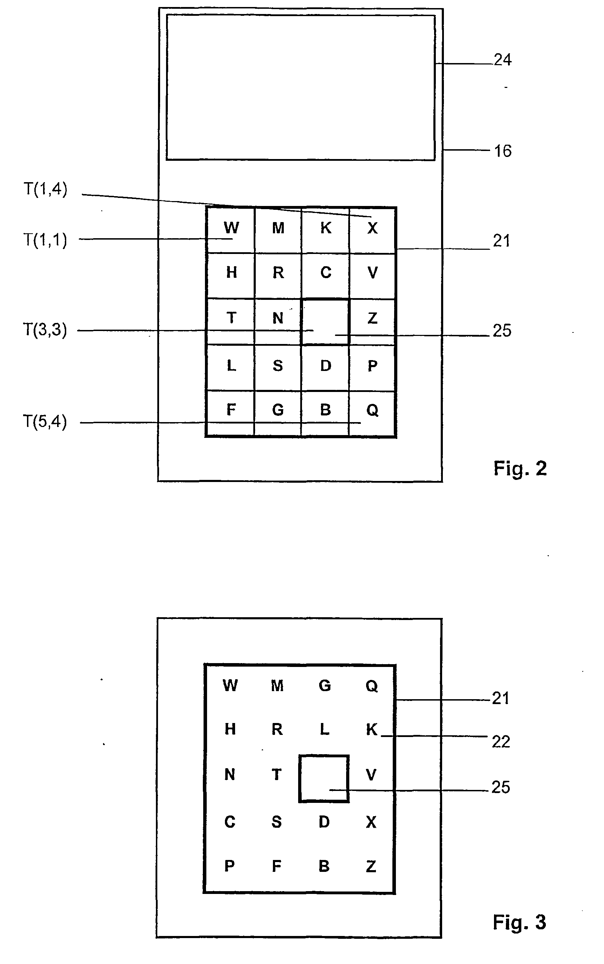

Fig. 2 zeigt eine Darstellung eines Eingabefeldes mit einem Tastenfeld, das eine der möglichen Häufigkeitsverteilungen von Konsonanten für die deutsche Sprache aufweist.
Das Eingabefeld 16 ist in 6x7 in der Regel quadratische Zellen aufgeteilt, von denen 4x5 Zellen das Tastenfeld 21 definieren, wobei das Tastenfeld so zentriert vorliegt, dass sich auf den Seiten des Tastenfeldes entweder eine freie Zellenreihe, bzw. eine freie Zellenkolonne befindet.
Das Tastenfeld 21 ist in die Tasten, bzw. T(I,K) unterteilt, wobei mit I die Zeilen und mit K die Kolonnen des Tastenfeldes bezeichnet sind. Die Taste T(3,3) ist eine sogenannte Vokal-Taste 25, deren Funktion später beschrieben wird. Den übrigen Tasten T(1,1) bis T(5,4) sind den Konsonanten zugeordnet und zwar derart, dass die häufig auftretenden Konsonanten zentral angeordnet sind und die weniger häufig oder selten auftretenden Konsonanten vorwiegend in der Peripherie liegen. So belegen etwa die seltenen Konsonanten W und Q die Tasten T(1,1) und T(5,4). Die dargestellte Anordnung ist eine mögliche von vielen Anordnungen, die die Häufigkeitsverteilung der Konsonanten berücksichtigt. Diese Anordnungen sind sprachspezifisch.
Die Unterteilung des Eingabefeldes in 6x7 quadratische Zellen ist für die Zuordnung der Tasten bei gegebenen x/y-Koordinaten vorgesehen. Neben dem Tastenfeld 21 kann sich ein Sondertastenfeld 24 befinden, das Tasten mit Sonderzeichen wie etwa Interpunktionszeichen und dergleichen aufweist.

Fig. 3 zeigt eine Darstellung eines Tastenfeldes 21 mit einer möglichen Häufigkeitsverteilung von Konsonanten für die englische Sprache.
Erkennbar ist wiederum die Taste T(3,3) als Vokal-Taste 25, die von den 19 Konsonant-Tasten 22 umgeben ist. Die Anordnung der Konsonanten erfüllt wiederum die gleiche Bedingung wie in Fig. 2, nämlich dass der Weg zu den am häufigsten vorkommenden Konsonanten am kürzesten ausfällt.

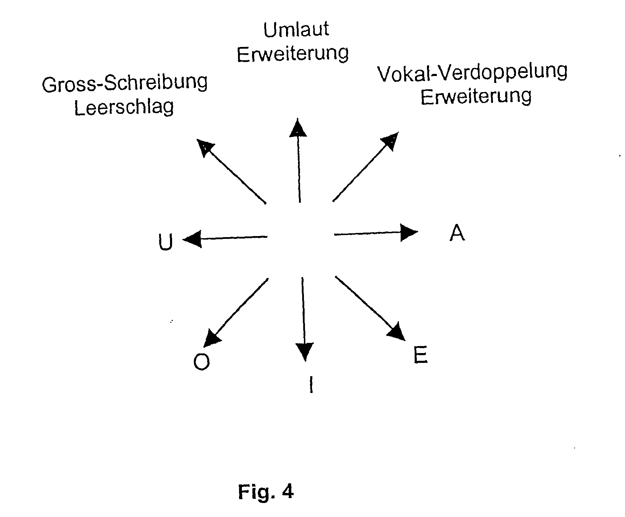

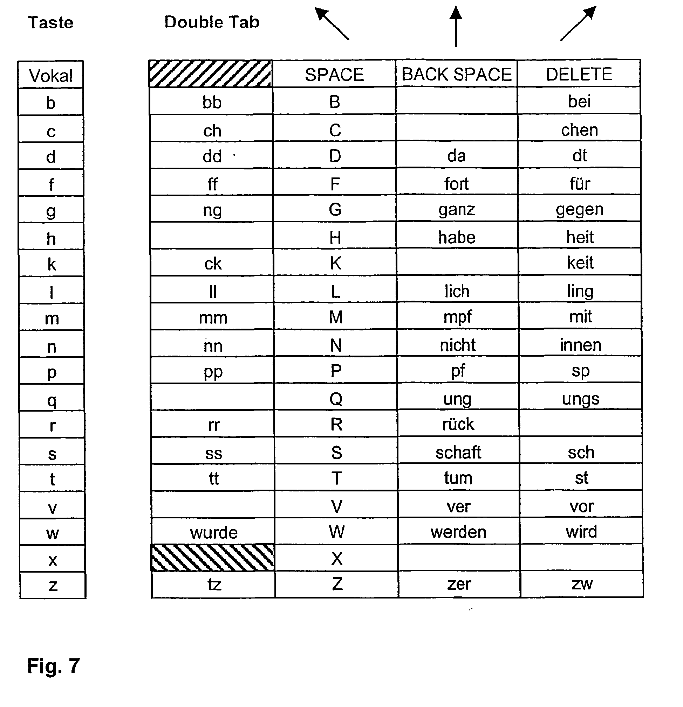

Fig. 4 zeigt acht Strichrichtungen, von einer der zwanzig Tasten ausgehend, mit ihren Zuordnungen zu den Vokalen A, E, I, O, U und zu drei speziell ausgezeichneten Strichrichtungen. Die Strichrichtung 'nach oben' ist für den Umlaut und j vorgesehen, wenn sie ohne Absetzen nach einer vokalerzeugenden Strichrichtung ausgeführt wird. Wenn sie sofort nach dem Absetzen auf einer der zwanzig Tasten ausgeführt wird, wird eine sogenannte 'Erweiterung' ausgeführt; r wird zu 'rück', s wird zu 'schaft', t wird zu 'tum'. Die Strichrichtung 'nach rechts-oben' ist für eine Vokalverdoppelung vorgesehen, wenn sie ohne Absetzen nach einer vokalerzeugenden Strichrichtung ausgeführt wird. Wenn sie sofort nach dem Absetzen auf einer der zwanzig Tasten ausgeführt wird, wird eine Erweiterung ausgeführt; b wird zu 'bei', c wird zu 'chen', d wird zu 'dt'. Die Strichrichtung 'nach links-oben' ist für eine Gross-Schreibung vorgesehen, wenn sie ohne Absetzen nach einer vokalerzeugenden Strichrichtung ausgeführt wird, oder wenn sie sofort nach dem Absetzen auf einer der zwanzig Tasten ausgeführt wird (siehe auch Fig. 7). Wird die Strichrichtung 'nach links-oben' als letzte eines Strokes oder sofort nach dem Absetzen auf der Vokaltaste ausgeführt, so wird ein Leerschlag erzeugt. Diese Strichrichtungen sind für Stiftbewegungen (2 - 8 mm) vorgesehen, was später beschrieben wird.

Im weiteren wird das Schnellschreibsystem in seinen Grundzügen erläutert an Hand einer ersten Auswahl von Handhabungshinweisen:
- Striche die auf einer Konsonanttaste starten, beeinflussen diesen Konsonanten oder hängen ihm Vokale an.
- Wenn auf der Vokaltaste abgesetzt wird, so wird ein Vokal geschrieben.
- Ein Wort muss mit einem Strich 'nach links-oben' abgeschlossen werden (Leerschlag).
- Bei Linienkombinationen ist nur wichtig auf welcher Taste begonnen wird. Die Tasten die gekreuzt werden, werden davon nicht betroffen.
- Tab (●) schreibt den gewählten Konsonanten einzeln und ohne Veränderung.
- Ein Wort das mit einem Strich 'nach links-oben' angefangen wird, wird gross geschrieben.

Mit 'Tab' und 'Stroke', die beide den 'Basic Moves' angehören, werden Buchstaben, resp. Buchstabenfolgen, d.h. Silben generiert, wie an Hand der nachfolgenden einfachen Beispielen erläutert wird:

Wird der Stift auf einer Konsonant-Taste abgesetzt und wieder angehoben, so erscheint auf dem Textfeld der angetippte, bzw. gewählte Konsonant. Damit ist eine Quittung der getätigten Eingabe erfolgt, indem die Eingabe auf dem Textfeld verifiziert werden kann. Diese Quittung ist aber nicht zwingend. Wesentlich ist, dass die Eingabe in der dafür vorgesehenen Rechnereinheit verarbeitet und gespeichert wird.

Wird der Stift auf der Vokal-Taste abgesetzt, eine Stiftbewegung in einer der Strichrichtungen für die Vokale A, ..., U ausgeführt und wieder angehoben, so wird die Eingabe des angetippten, bzw. gewählten Vokales erzeugt.

Wird der Stift auf einer Konsonant-Taste abgesetzt, eine Stiftbewegung in einer der Strichrichtungen für die Vokale A, ..., U ausgeführt und wieder angehoben, so wird der angetippte Konsonant erzeugt, gefolgt vom entsprechenden Vokal.

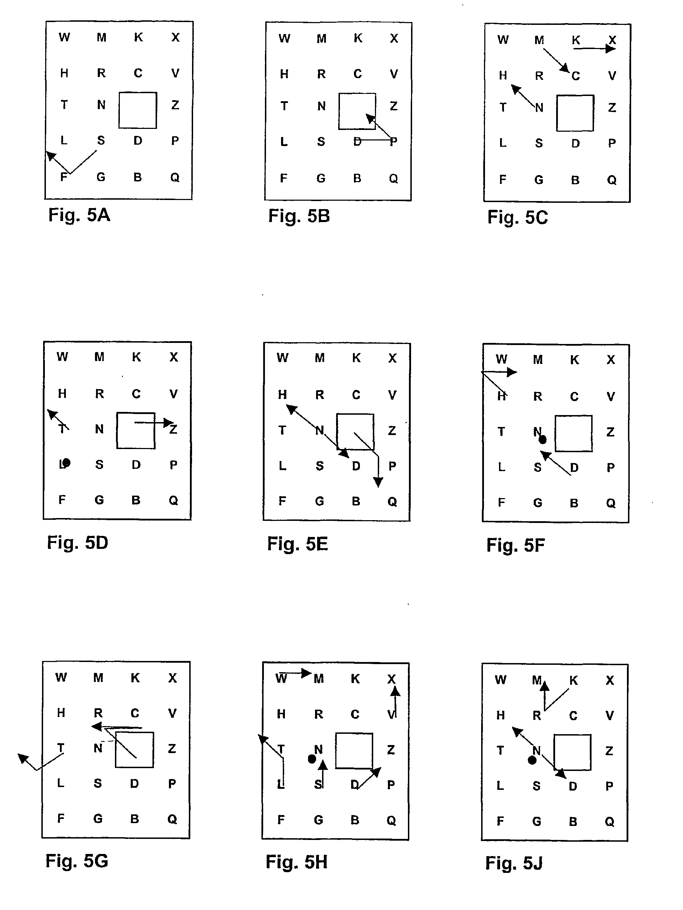

Demnach wird das Wort 'so ', gefolgt von einem Leerschlag, wie folgt geschrieben: Stift auf S absetzen, Stift 'nach links-unten' führen (o), Stift 'nach links-oben' führen (Leerschlag) und Stift wieder anheben (Fig. 5A).

So wird das Wort 'da ', gefolgt von einem Leerschlag, geschrieben:
Stift auf D absetzen, Stift 'nach rechts' führen (a), Stift 'nach links-oben' führen (Leerschlag) und Stift wieder anheben (Fig. 5B).

So wird das Wort 'kamen ' geschrieben:
Stift auf K absetzen, Stift 'nach rechts' führen (a) und wieder anheben;
Stift auf M absetzen, Stift 'nach rechts-unten' führen (e) und wieder anheben;
Stift auf N absetzen, Stift 'nach links-oben' führen (Leerschlag) und wieder anheben.

Fig. 5C zeigt ein Tastenfeld mit den Strichrichtungen für die Stiftbewegungen zum Wort 'kamen'. Neben einer ersten Strichrichtung für die Stiftbewegung 'nach rechts' für den Wortteil 'ka' und einer zweiten Strichrichtung für die Stiftbewegung 'nach rechts-unten' für den Wortteil 'me' ist eine dritte Strichrichtung für die Stiftbewegung 'nach links-oben' ersichtlich, die den Leerschlag nach dem Wortabschluss bewirkt.

So wird das Wort 'alt ' geschrieben:
Stift auf Vokal-Taste absetzen, Stift 'nach rechts' führen (a) und wieder anheben;
Stift auf L absetzen und wieder anheben (antippen);
Stift auf T absetzen, Stift 'nach links-oben' führen (Leerschlag) und wieder anheben (Fig. 5D).

So wird das Wort 'einen' geschrieben:
Stift auf Vokal-Taste absetzen, Stift 'nach rechts-unten' führen (e), Stift 'nach unten' führen (i) und wieder anheben;
Stift auf N absetzen, Stift 'nach rechts-unten' führen (ne) und wieder anheben;
Stift auf N absetzen, Stift 'nach links-oben' führen (Leerschlag) und wieder anheben (Fig. 5E).

So wird das Wort 'Hand' geschrieben:
Stift auf H absetzen, Stift 'nach links-oben' führen (Gross-Schreibung), Stift 'nach rechts' führen (a) und wieder anheben;
Stift auf N absetzen und wieder anheben (antippen);
Stift auf D absetzen, Stift 'nach links-oben' führen (Leerschlag) und wieder anheben (Fig. 5F).

So wird das Wort 'Auto' geschrieben:
Stift auf Vokal-Taste absetzen, Stift 'nach links-oben' führen (Gross-Schreibung), Stift 'nach rechts' führen (a), Stift 'nach links' führen (u) und wieder anheben;
Stift auf T absetzen, Stift 'nach links-unten' führen (o), Stift 'nach links-oben' führen (Leerschlag) und wieder anheben (Fig. 5G).

Wird der Stift auf einer Taste abgesetzt, eine Stiftbewegung in einer der 3 Strichrichtungen 'NACH OBEN' ausgeführt und wieder angehoben, so wird ein 'Shortcut 1. Art' erzeugt, deren Anzahl 20*3 beträgt. 'NACH OBEN' in Grossschrift steht hier für 'nach rechts-oben', 'nach oben' und 'nach links-oben'.

Wird der Stift auf einer Taste abgesetzt, eine Stiftbewegung in einer der 3 Strichrichtungen 'NACH OBEN' ausgeführt, Stiftbewegung in einer der 8 Strichrichtungen und wieder angehoben, so wird ein 'Shortcut 2. Art' erzeugt, deren Anzahl 20*3*7 beträgt.

Grundsätzlich sind 8 Strichrichtungen möglich. Werden die Strichrichtungen nun aneinandergereiht, bzw. zusammengesetzt, so fällt eine Strichrichtung weg, weil doppelt-lange Strichrichtungen aus verschiedenen Gründen nicht vorgesehen sind, wie später erläutert wird.

Wird der Stift auf einer Taste abgesetzt, angehoben und innerhalb kurzer Zeit (typischerweise innert ca. 0,3 s) ein zweites Mal auf der gleichen Taste abgesetzt und wieder angehoben, so wird ein 'Double Tab' erzeugt.

Fig. 7 zeigt eine Tabelle mit Double Tabs und Shortcuts. In der Titelzeile sind die darunter dargestellten Kolonnen bezeichnet mit 'Taste', mit 'Double Tab' und mit drei Strichrichtungen. Alle zu dieser Tabelle gehörenden Stiftbewegungen werden ab einer Konsonant-Taste oder ab der Vokal-Taste geführt.
Die Lücken, bzw. Freiplätze in der Tabelle stehen einer persönlichen Zuordnung zur Verfügung und können mit den häufigsten persönlichen Wörtern gefüllt werden.

Wird der Stift auf einer Konsonant-Taste abgesetzt, und auf dieser ein Double Tab ausgeführt und wieder angehoben, so wird in der Regel der entsprechende Doppel-Konsonant, ein Sonderzeichen oder ein Wort gemäss der vierten Kolonne von rechts (Fig. 7) erzeugt.

Wird der Stift auf einer Konsonant-Taste abgesetzt, eine Stiftbewegung 'nach links-oben' geführt und wieder angehoben, so wird der gewählte Konsonant als Grossbuchstabe gemäss der dritten Kolonne von rechts (Fig. 7) erzeugt.

Wird der Stift auf einer Konsonant-Taste abgesetzt, der Stift 'nach oben' geführt und wieder angehoben, so wird eine Buchstabenfolge gemäss der zweiten Kolonne von rechts (Fig. 7) erzeugt.

Wird der Stift auf einer Konsonant-Taste abgesetzt, der Stift 'nach rechts-oben' geführt und wieder angehoben, so wird eine Buchstabenfolge gemäss der ersten Kolonne von rechts (Fig. 7) erzeugt.

Wird der Stift auf der Vokal-Taste abgesetzt, in einer der drei Strichrichtungen geführt und wieder angehoben, so werden Funktionen wie 'SPACE', 'BACK SPACE' oder 'DELETE' ausgeführt.

Wird der Stift auf der Vokal-Taste abgesetzt und ein Double Tab ausgeführt (schraffiertes Feld), so wird die Funktion 'Double Tab Shortcut' gestartet; anschliessend wird auf irgendeiner Taste ein Tab, Double Tab oder eine Stiftbewegung in der Strichrichtungen ausgeführt.

Wird auf der X-Taste ein Double Tab ausgeführt (schraffiertes Feld), so wird ein Menüfenster mit einer EXIT-Taste, einer Zahlentaste und vier Auswahlfeldern zur Lernhilfe angezeigt. Die Wahl der X-Taste ist hierfür nicht zwingend vorgesehen. Wesentlich ist, dass es sich um eine selten gebrauchte Taste handelt, was für die X-Taste zweifellos zutrifft.

Im Folgenden werden einige weiterführende Handhabungshinweise für das Schnellschreibgerät erläutert:
- Double Tab (● ●) auf der Konsonant-Taste verdoppelt oder erweitert diesen; aus b wird bb, aus c wird ch, aus k wird ck.
- Double Tab (● ●) auf der Vokal-Taste öffnet Menüfenster mit Wörterliste. Alle Strichrichtungen, die nach oben führen, öffnen meistens bestimmte Menüfenster.

Damit wird etwa das Wort 'verwandtschaftlich' wie folgt geschrieben:
Stift auf V absetzen, Stift 'nach oben' führen (ver) und wieder anheben;
Stift auf W absetzen, Stift 'nach rechts' führen (a) und wieder anheben;
Stift auf N absetzen und wieder anheben;
Stift auf D absetzen, Stift 'nach rechts-oben' führen (dt) und wieder anheben;
Stift auf S absetzen, Stift 'nach oben' führen (schaft), Stift wieder anheben;
Stift auf L absetzen, Stift 'nach oben' führen (lich), Stift 'nach links-oben' führen (Leerschlag) und wieder anheben (Fig. 5H).

So wird das Wort 'können' geschrieben:
Stift auf K absetzen, Stift 'nach links-unten' führen, Stift 'nach oben' führen (ö) und wieder anheben;
Stift zweimal auf N absetzen (nn), Stift 'nach rechts-unten' führen (e) und wieder anheben;
Stift auf N absetzen, Stift 'nach links-oben' führen (Leerschlag) und wieder anheben (Fig. 5J).

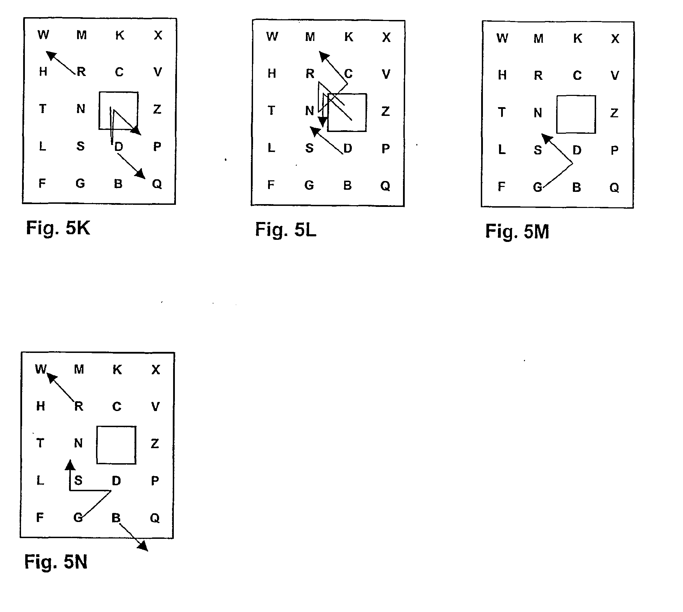

So wird das Wort 'jeder' geschrieben:
Stift auf Vokal-Taste absetzen, Stift 'nach unten' führen, Stift 'nach oben' führen (j), Stift 'nach rechts-unten' führen (e) und wieder anheben;
Stift auf D absetzen, Stift 'nach rechts-unten' führen (e) und wieder anheben;
Stift auf R absetzen, Stift 'nach links-oben' führen (Leerschlag) und wieder anheben (Fig. 5K).

So wird das Wort 'DIY' geschrieben:
Stift auf D absetzen, Stift 'nach links-oben' führen (D) und wieder anheben;
Stift auf Vokal-Taste absetzen, Stift 'nach links-oben' führen, Stift 'nach unten' führen (I) und wieder anheben;
Stift auf Vokal-Taste absetzen, Stift 'nach links-oben' führen, Stift 'nach unten' führen,
Stift 'nach rechts-oben' führen (Y), Stift 'nach links-oben' führen (Leerschlag) und wieder anheben (Fig. 5L).

So wird das Wort 'gegen' geschrieben (siehe auch Fig. 7):
Stift auf G absetzen, Stift 'nach rechts-oben' führen (gegen), Stift 'nach links-oben' führen (Leerschlag) und wieder anheben (Fig. 5M).

So wird das Wort 'gegenüber' geschrieben:
Stift auf G absetzen, Stift 'nach rechts-oben' führen (gegen), Stift 'nach links' führen, Stift 'nach oben' führen (ü) und wieder anheben;
Stift auf B absetzen, Stift 'nach rechts-unten' führen (be) und wieder anheben;
Stift auf R absetzen, Stift 'nach links-oben' führen (Leerschlag) und wieder anheben (Fig. 5N).

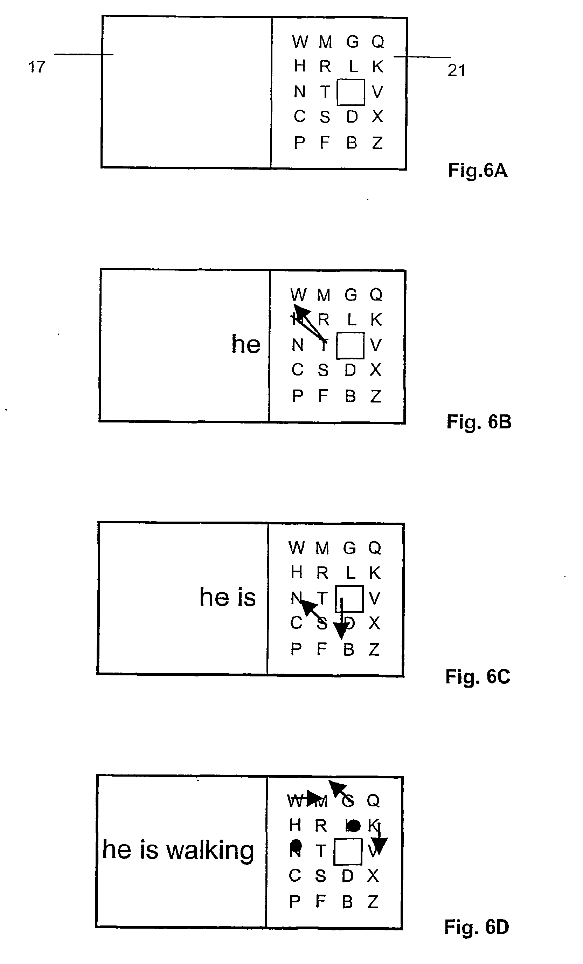

Fig. 6A - 6D zeigen eine zusammenhängende Folge von Eingaben in englischer Sprache. Damit soll erläutert werden, wie der Satz 'he is walking' auf dem Textfeld erscheint.
Fig. 6A zeigt das Eingabefeld 16 und das danebenliegende Textfeld 17 als Teil eines Monitors, bzw. einer Eingabefläche. Die im Eingabefeld um die Vokal-Taste angeordneten Konsonanten entsprechen in ihrer Anordnung der Häufigkeit im englischen Sprachgebrauch.
Fig. 6B zeigt die Eingabe mit dem Stift beginnend auf der Taste H, mit Stiftbewegung 'nach rechts-unten', einer Stiftbewegung 'nach links-oben' und ein Anheben des Stiftes, wonach das Wort 'he ', gefolgt von einem Leerschlag, erzeugt und auf dem Textfeld dargestellt wird.
Fig. 6C zeigt die weitere Eingabe mit dem Stift beginnend auf der Vokal-Taste, mit Stiftbewegung 'nach unten' und ein Anheben des Stiftes, danach Absetzen des Stiftes auf der S-Taste und einer Stiftbewegung 'nach links-oben', wonach das Wort 'is' erzeugt und auf dem Textfeld dargestellt wird.
Fig. 6D zeigt die weitere Eingabe mit dem Stift beginnend auf der W-Taste, mit Stiftbewegung 'nach rechts' und ein Anheben des Stiftes, danach Antippen der L-Taste, danach Absetzen des Stiftes auf der K-Taste, einer Stiftbewegung 'nach unten' und ein Anheben des Stiftes, danach Antippen der N-Taste, danach Absetzen des Stiftes auf der G-Taste, einer Stiftbewegung 'nach links-oben' und ein Anheben des Stiftes, wobei das Wort 'walking' erzeugt und auf dem Textfeld dargestellt wird.

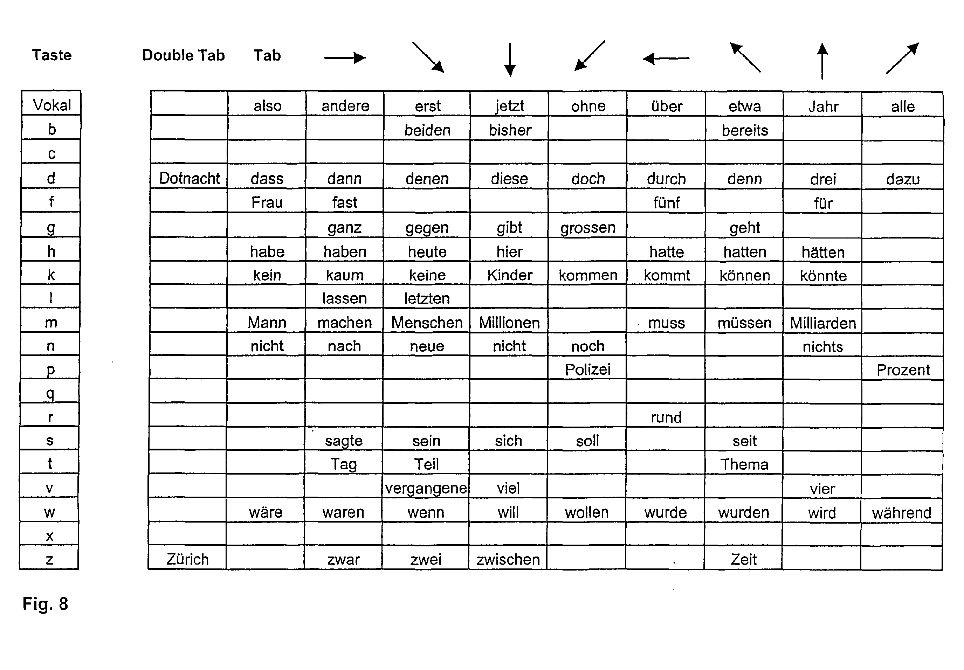

Fig. 8 zeigt eine Tabelle mit Double Tab Shortcuts. In der Titelzeile sind die darunter dargestellten Kolonnen bezeichnet mit 'Taste', mit 'Double Tab', mit 'Tab' und mit acht Strichrichtungen. Alle zu dieser Tabelle gehörenden Stiftbewegungen werden ab der Vokal-Taste mit Double Tab gestartet; danach folgen
- ein Double Tab auf irgendeiner Taste, oder
- ein Tab auf irgendeiner Taste, oder
- ein Stroke auf irgendeiner Taste.

Die Lücken, bzw. Freiplätze in der Tabelle stehen wiederum der persönlichen Zuordnung zur Verfügung und können mit den häufigsten persönlichen Wörtern gefüllt werden.

Wird auf der Vokal-Taste ein Double Tab ausgeführt und danach auf irgendeiner Taste ein Double Tab ausgeführt, so werden die Wörter gemäss der zehnten Kolonne von rechts erzeugt (Fig. 8).
Also Double Tab auf der Vokal-Taste, gefolgt von Double Tab auf der Taste Z erzeugt das Wort 'Zürich'.

Wird auf der Vokal-Taste ein Double Tab und danach auf irgendeiner Taste ein Tab ausgeführt, so werden die Wörter gemäss der neunten Kolonne von rechts erzeugt (Fig. 8).
Also Double Tab auf der Vokal-Taste, gefolgt von Tab auf der Taste K erzeugt das Wort 'kein'.

Wird auf der Vokal-Taste ein Double Tab und danach ein Stroke ausgeführt, so werden die Wörter gemäss der ersten bis achten Kolonne von rechts erzeugt (Fig. 8).
Also Double Tab auf der Vokal-Taste, gefolgt von einer Stiftbewegung 'nach unten' ausgeführt ab der Taste B erzeugt das Wort 'bisher'.
Oder Double Tab auf der Vokal-Taste, gefolgt von einer Stiftbewegung 'nach rechts' ausgeführt ab der Vokal-Taste erzeugt das Wort 'andere'.

Gesamthaft stehen somit 20*10 Worte zur Funktion 'Double Tab Shortcuts' zur Verfügung.

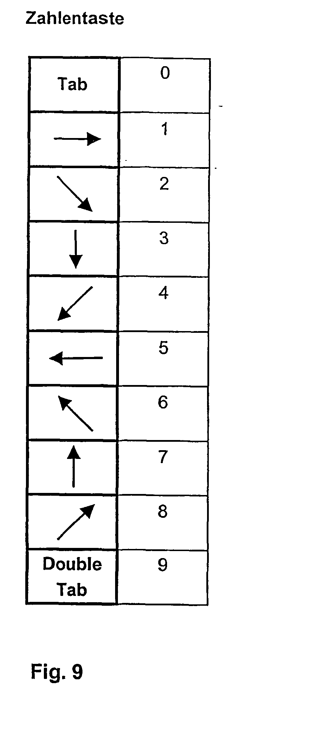

Fig. 9 zeigt eine Tabelle mit Stiftbewegungen und ihren Zuordnungen zu den Zahlen 0 bis 9. Wenn auf der Zahlentaste ein Tab ausgeführt wird, wird die Zahl '0' erzeugt. Wenn eine Strichrichtung 'nach rechts' ausgeführt wird, wird die Zahl '1' erzeugt. In ähnlicher Weise werden die Zahlen 2 bis 8 erzeugt. Wenn auf der Zahlentaste ein Double Tab ausgeführt wird, wird die Zahl '9' erzeugt.

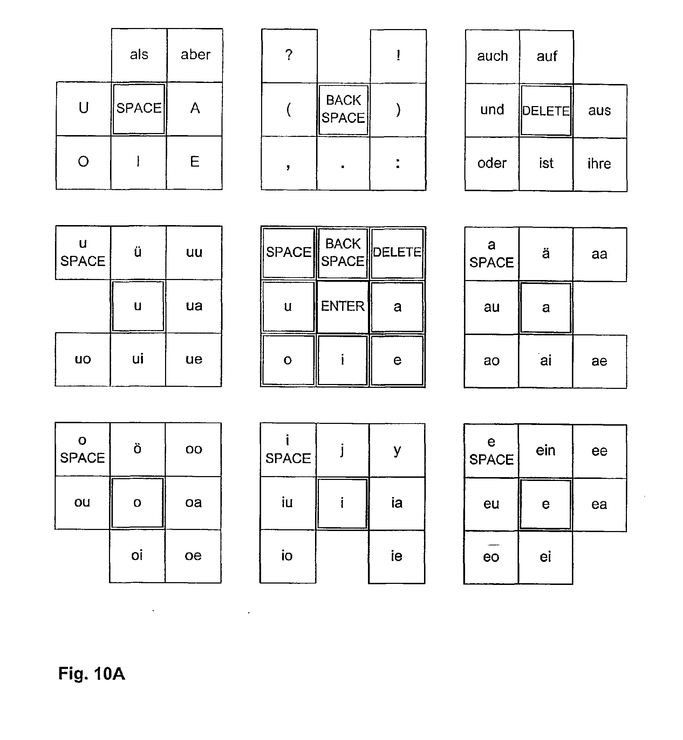

Fig. 10A zeigt neun Menü-Fenster welche zur Vokal-Taste gehören. Sie werden nur einzeln auf dem Monitor dargestellt. Sie dienen als Hilfestellung und Lernprogramm solange der Benützer die verschiedenen Bedeutungen der acht Strichrichtungen und deren Kombinationen nicht kennt. Die dargestellten Menüfenster stellen eine maximale Variante der Hilfestellung dar.

Im Zentrum liegt ein Neuner-Fenster, acht dazugehörende Achter-Fenster sind rundherum angeordnet. Die Peripherie des Neuner-Fensters enthält acht doppelt-umrahmte Tasten. Jedes der acht Achter-Fenster hat eine doppelt-umrahmte Taste im Zentrum.

Wenn der Stift auf der Vokal-Taste abgesetzt wird, erscheint das hier dargestellte Neuner-Fenster auf dem Monitor. Es überdeckt, über der Vokal-Taste zentriert, das Tastenfeld (z.T. teilweise). Im Zentrum dieses Neuner-Fensters liegt die ENTER-Taste. Sie wird gewählt, wenn der Stift angehoben wird, ohne dass er geführt wird. Durch Führen des Stifts in eine der acht Strichrichtungen wird eine Auswahl in diesem Menüfenster getroffen. Wenn zum Beispiel die Strichrichtung 'nach rechts-oben' ausgeführt wird (doppelt-umrahmte DELETE-Taste wählen), so erscheint das Achter-Fenster mit der doppelt-umrahmten DELETE-Taste im Zentrum. Es überdeckt über der schon angezeigten DELETE-Taste zentriert, das Tastenfeld (z.T. teilweise). Wenn der Stift angehoben wird, ohne dass er weiter geführt wird, so wird DELETE gewählt und ausgeführt. Wenn der Stift nicht angehoben, sondern z.B. 'nach links' geführt wird ('und '-Taste wählen), so wird das Wort 'und ', gefolgt von einem Leerschlag, erzeugt.

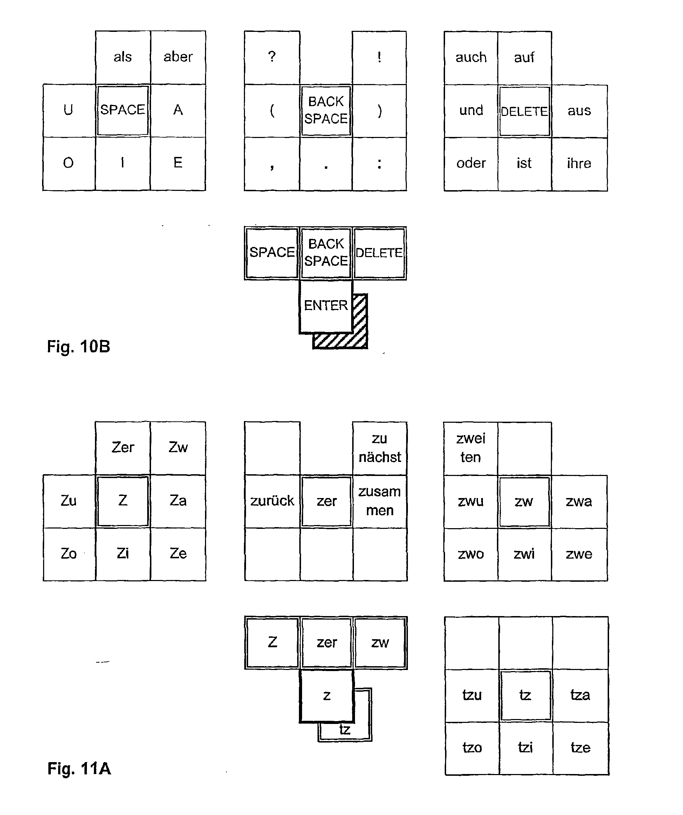

Fig. 10B zeigt vier Menü-Fenster, welche zur Vokal-Taste gehören. Sie werden nur einzeln auf dem Monitor dargestellt. Sie dienen als Hilfestellung und Lernprogramm solange der Benützer nicht alle Bedeutungen der acht Strichrichtungen und deren Kombinationen kennt. Die dargestellten Menüfenster stellen eine mittlere Variante der Hilfestellung dar: Der Benützer kennt die fünf vokalerzeugenden Strichrichtungen.

Im Zentrum liegt ein Fünfer-Fenster, drei dazugehörende Achter-Fenster sind darüber angeordnet. Die halb verdeckte, schraffierte Taste symbolisiert den Zugang zu den Double Tab Shortcuts, welche durch Double Tab auf der Vokal-Taste und durch Stiftbewegungen auf irgendeiner Taste erreicht werden. Der obere Teil des Fünfer-Fensters enthält drei doppelt-umrahmte Tasten. Jedes der drei Achter-Fenster hat eine doppelt-umrahmte Taste im Zentrum.

Wenn der Stift auf der Vokal-Taste abgesetzt wird, erscheint das hier dargestellte Fünfer-Fenster auf dem Monitor. Es überdeckt, über der Vokal-Taste zentriert, das Tastenfeld (z.T. teilweise). Im Zentrum dieses Fünfer-Fensters liegt die ENTER-Taste.

Sie wird gewählt, wenn der Stift angehoben wird, ohne dass er geführt wird. Durch Führen des Stifts in eine der drei Strichrichtungen 'NACH OBEN', oder durch Double Tab wird eine Auswahl in diesem Menüfenster getroffen. Wenn zum Beispiel die Strichrichtung 'nach rechts-oben' ausgeführt wird (doppelt-umrahmte DELETE-Taste wählen), so erscheint das Achter-Fenster mit der doppelt-umrahmten DELETE-Taste im Zentrum. Es überdeckt über der schon angezeigten DELETE-Taste zentriert, das Tastenfeld (z.T. teilweise). Wenn der Stift angehoben wird, ohne dass er weiter geführt wird, so wird DELETE gewählt und ausgeführt. Wenn der Stift nicht angehoben sondern z.B. 'nach links' geführt wird ('und '-Taste wählen), so wird das Wort 'und' erzeugt.

Fig. 11A zeigt fünf Menüfenster, welche zur Z-Taste gehören. Sie werden nur einzeln auf dem Monitor dargestellt. Sie dienen als Hilfestellung und Lernprogramm, solange der Benützer nicht alle Bedeutungen der acht Strichrichtungen und deren Kombinationen kennt. Die dargestellten Menüfenster stellen eine mittlere Variante der Hilfestellung dar: Der Benützer kennt die fünf vokalerzeugenden Strichrichtungen.

Im Zentrum liegt ein Fünfer-Fenster, drei dazugehörende Achter-Fenster sind darüber und ein Neuner-Fenster ist rechts davon angeordnet. Das Fünfer-Fenster enthält vier doppelt-umrahmte Tasten. Die vierte halb verdeckte doppelt-umrahmte Taste kann auch weggelassen werden, da sie während der kurzen Zeit zwischen den beiden Tabs des Double Tab, kaum lesbar ist. Jedes der drei Achter-Fenster und das Neuner-Fenster hat eine doppelt-umrahmte Taste im Zentrum.

Wenn der Stift auf der Z-Taste abgesetzt wird, erscheint das hier dargestellte Fünfer-Fenster auf dem Monitor. Es überdeckt, über der Z-Taste zentriert, das Tastenfeld (z.T. teilweise). Im Zentrum dieses Fünfer-Fensters liegt die 'z'-Taste. Sie wird gewählt, wenn der Stift angehoben wird, ohne dass er geführt wird. Durch Führen des Stifts in eine der drei Strichrichtungen 'NACH OBEN', oder durch Double Tab wird eine Auswahl in diesem Menüfenster getroffen. Wenn zum Beispiel die Strichrichtung 'nach oben' ausgeführt wird (doppelt-umrahmte 'zer'-Taste wählen), so erscheint das Achter- Fenster mit der doppelt-umrahmten 'zer'-Taste im Zentrum. Es überdeckt über der schon angezeigten 'zer'-Taste zentriert, das Tastenfeld (z.T. teilweise). Wenn der Stift angehoben wird, ohne dass er weiter geführt wird, so wird 'zer' gewählt und erzeugt. Wenn der Stift nicht angehoben, sondern z.B. 'nach rechts-oben' geführt wird ('zunächst '-Taste wählen), so wird das Wort 'zunächst' erzeugt.

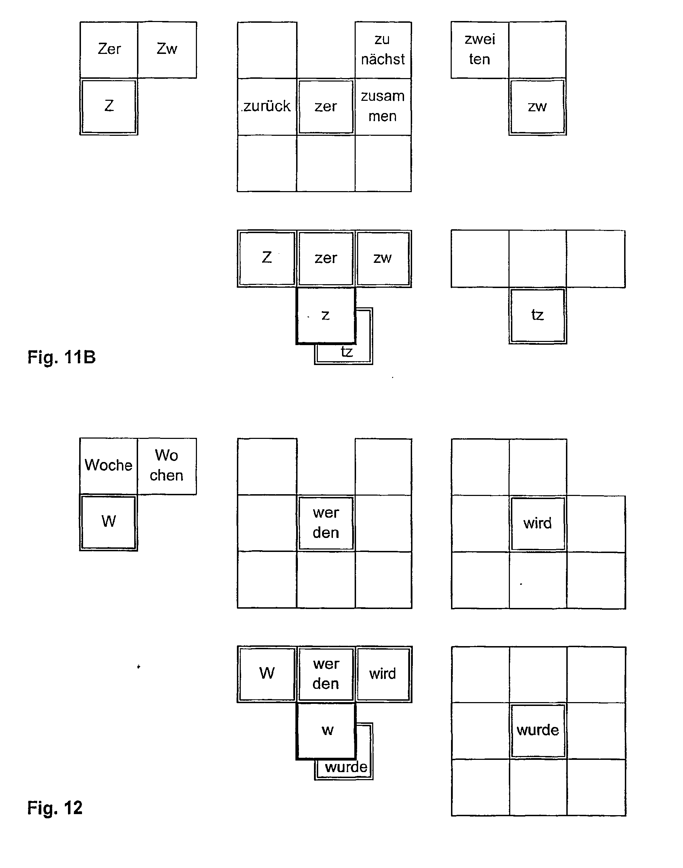

Fig. 11B zeigt fünf Menüfenster; welche zur Z-Taste gehören. Sie werden nur einzeln auf dem Monitor dargestellt. Sie dienen als Hilfestellung und Lernprogramm solange der Benützer nicht alle Bedeutungen der acht Strichrichtungen und deren Kombinationen kennt. Die dargestellten Menüfenster stellen eine minimale Variante der Hilfestellung dar: Der Benützer kennt die Grundbedeutungen der acht Strichrichtungen.

Im Zentrum liegt ein Fünfer-Fenster, drei dazugehörende Menüfenster sind darüber und eines ist rechts davon angeordnet. Das Fünfer-Fenster enthält vier doppelt-umrahmte Tasten. Jedes der vier Menüfenster hat eine doppelt-umrahmte Taste im Zentrum. Es kommen zwei Dreier-Fenster, ein Vierer-Fenster und ein Achter-Fenster vor.

Wenn auf der Z-Taste zum Beispiel ein Double Tab ausgeführt wird, erscheint das hier dargestellte Vierer-Fenster auf dem Monitor. Es überdeckt, über der Z-Taste zentriert, das Tastenfeld (z.T. teilweise). Im Zentrum dieses Vierer-Fensters liegt die 'tz'-Taste. Sie wird gewählt, wenn der Stift angehoben wird, ohne dass er geführt wird. Durch Führen des Stifts in eine der drei Strichrichtungen 'NACH OBEN' wird eine Auswahl getroffen. Wenn der Stift nach dem Double Tab nicht angehoben wird sondern zum Beispiel die Strichrichtung 'nach oben' ausgeführt wird (leere Taste), so wird ein vorerst noch nicht bestimmtes Wort erzeugt.

Die Buchstaben(-Kombinationen) 'tz', 'Z' und 'zw' werden häufig von Vokalen gefolgt. Deshalb stehen bei den entsprechenden Menüfenstern die vokalerzeugenden Strichrichtungen nicht zur Verfügung um Worte zu erzeugen. Sie sind schon vergeben um Buchstaben-Kombinationen wie z.B. 'tze', 'tzi', 'zwa' oder 'zwi' zu erzeugen. Die Buchstaben-Kombination 'zer' wird meist von einem Konsonanten gefolgt. Deshalb stehen hier sieben Strichrichtungen zur Verfügung um Worte zu erzeugen.

Fig. 12 zeigt fünf Menüfenster welche zur W-Taste gehören. Sie werden nur einzeln auf dem Monitor dargestellt. Sie dienen als Hilfestellung und Lernprogramm solange der Benützer nicht alle Bedeutungen der acht Strichrichtungen und deren Kombinationen kennt. Die dargestellten Menüfenster stellen eine minimale Variante der Hilfestellung dar: Der Benützer kennt die Grundbedeutungen der acht Strichrichtungen.

Im Zentrum liegt ein Fünfer-Fenster, drei dazugehörende Menüfenster sind darüber und eines ist rechts davon angeordnet. Das Fünfer-Fenster enthält vier doppelt-umrahmte Tasten. Jedes der vier Menüfenster hat eine doppelt-umrahmte Taste im Zentrum. Es kommen ein Dreier-Fenster, zwei Achter-Fenster und ein Neuner-Fenster vor.

Wenn der Stift auf der W-Taste abgesetzt wird, erscheint das hier dargestellte Fünfer-Fenster auf dem Monitor. Es überdeckt, über der W-Taste zentriert, das Tastenfeld (z.T. teilweise). Im Zentrum dieses Fünfer-Fensters liegt die 'w'-Taste. Sie wird gewählt, wenn der Stift angehoben wird, ohne dass er geführt wird. Durch Führen des Stifts in eine der drei Strichrichtungen 'NACH OBEN', oder durch Double Tab wird eine Auswahl in diesem Menüfenster getroffen. Wenn zum Beispiel die Strichrichtung 'nach links-oben' ausgeführt wird (doppelt-umrahmte W-Taste wählen), so erscheint das Dreier-Fenster mit der doppelt-umrahmten W-Taste im Zentrum. Es überdeckt über der schon angezeigten W-Taste zentriert, das Tastenfeld (z.T. teilweise). Wenn der Stift angehoben wird, ohne dass er weiter geführt wird, so wird 'W' gewählt und erzeugt. Wenn der Stift nicht angehoben, sondern z.B. 'nach rechts-oben' geführt wird ('Wochen'-Taste wählen), so wird das Wort 'Wochen' erzeugt. Wenn auf der W-Taste zum Beispiel ein Double Tab ausgeführt wird, erscheint das hier dargestellte Neuner-Fenster auf dem Monitor. Es überdeckt, über der W-Taste zentriert, das Tastenfeld (z.T. teilweise). Im Zentrum dieses Vierer-Fensters liegt die ,wurde'-Taste. Sie wird gewählt, wenn der Stift angehoben wird, ohne dass er geführt wird. Durch Führen des Stifts in eine der acht Strichrichtungen wird eine Auswahl getroffen. Wenn der Stift nach dem Double Tab nicht angehoben wird, sondern zum Beispiel die Strichrichtung 'nach links-oben' ausgeführt wird (leere Taste), so wird ein vorerst noch nicht bestimmtes Wort erzeugt.

An Hand von Flussdiagrammen wird das Verfahren im Folgenden weitergehend erläutert.

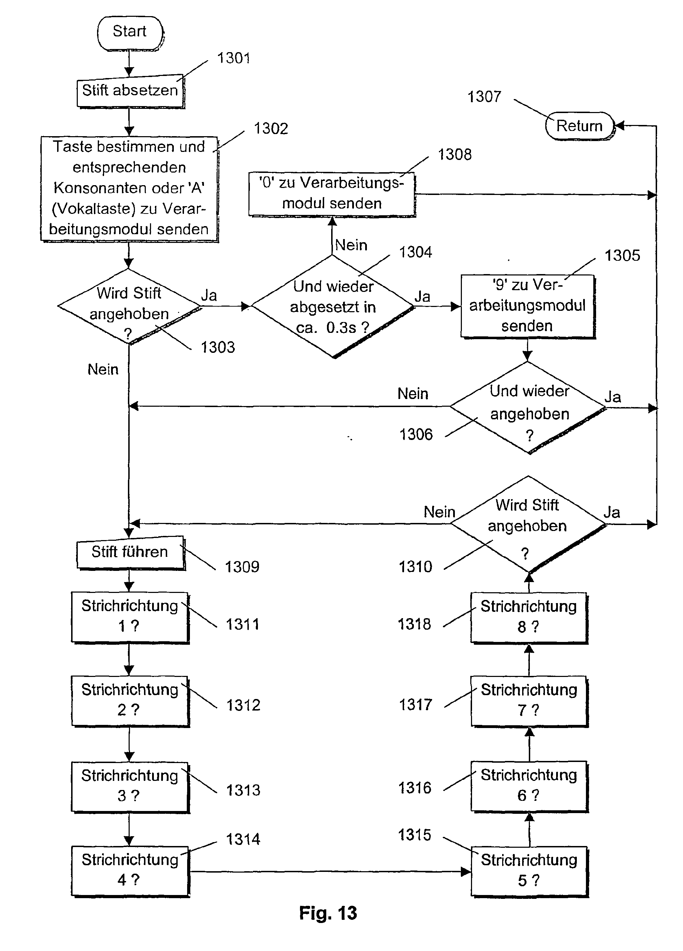

Fig. 13 zeigt ein Flussdiagramm für das Eingabemodul. Im Eingabemodul werden die angewählten Tasten und die davon ausgehenden Stiftbewegungen (Tab, Double Tab und Strokes) ermittelt. Durch eine Programmschleife wird erreicht, dass der Stift frei geführt werden kann und die entsprechenden Vokale und Funktionen ermittelt und aneinandergereiht werden können.
Im Eingabemodul werden im Wesentlichen die Stiftbewegungen analysiert und in einen standardisierten, internen Code übersetzt. Die einzelnen Zeichen dieses Codes sind einstellig. Für Stiftbewegungen wie Tab, Strichrichtungen und Double Tab sind die Zahlen 0 bis 9 vorgesehen. Für Fenster, die gewählt werden, ist jeweils der Konsonant vorgesehen, welcher auf der entsprechenden Taste dargestellt ist. Für die Vokal-Taste ist der Buchstabe 'A' vorgesehen.
Der interne Code setzt sich aus 30 Steuerzeichen zusammen. Jedes Steuerzeichen, das ermittelt wird, wird sofort an das Verarbeitungsmodul gesendet, wo es an den entsprechenden Stellen im Programmablauf eingelesen wird. Das Verarbeitungsmodul gewährleistet, dass einzelne und kombinierte Code-Zeichen richtig gedeutet und der entsprechende Buchstabe oder die entsprechende Buchstabenkombination erzeugt werden. Am folgenden Beispiel wird gezeigt, wie ein eingegebener Text in den internen Code übersetzt wird:

### Das bekannteste Mittel zur Texteingabe ist eine Tastatur ⇒ D61S6B2K1NNT2T826M63TT2L6Z5R6T62XT23NG1B26A3T86A23N26T61T81T5R6

Der Code wird vom Eingabemodul zum Verarbeitungsmodul gesendet und dort wieder in den ursprünglichen Text übersetzt.
Dieser Abschnitt des Programms startet mit dem Absetzen des Stiftes (Schritt 1301), wodurch x/y-Koordinaten der Berührungsstelle auf der Eingabefläche erzeugt werden, womit in Schritt 1302 die Taste bestimmt und das ermittelte Resultat, nämlich ein einstelliges Steuerzeichen (Buchstabe), als Information zum Verarbeitungsmodul gesendet wird, das ebenfalls Teil des Zentralprozessors ist.
Danach wird in Schritt 1303 geprüft, ob der Stift angehoben wurde. Falls 'Ja', wird in Schritt 1304 geprüft, ob der Stift innerthalb ca. 0,3 s wieder abgesetzt wurde. Falls 'Ja', handelt es sich um das Steuerzeichen '9', das als Information zum Verarbeitungsmodul gesendet wird (Schritt 1305). Danach wird in Schritt 1306 geprüft, ob der Stift wieder angehoben wurde. Falls'Ja' (ein Double Tab wurde ausgeführt), endet der Programmabschnitt mit 'Return' (Schritt 1307), womit das Programm wieder mit Start beginnt. Lag in Schritt 1304 ein 'Nein' vor (ein Tab wurde ausgeführt), so handelt es sich um das Steuerzeichen '0', das als Information zum Verarbeitungsmodul gesendet wird (Schritt 1308), wonach der Programmabschnitt mit 'Return' endet (Schritt 1307), vgl. auch Fig. 9.
Lag in Schritt 1306 ein 'Nein' vor, so wird mit der Stiftführung (Schritt 1309) weitergefahren und in Schritt 1311 die Strichrichtung '1' ermittelt, d. h. wenn der Stift 'nach rechts' geführt wird, wird dieser Stiftbewegung die Strichrichtung '1' zugeordnet und die entsprechende Information, bzw. das Steuerzeichen, zum Verarbeitungsmodul gesendet. Danach wird in Schritt 1312 weitergefahren.
Diese Zuordnung erfolgt unabhängig vom zurückgelegten Weg des Stiftes. Somit wird eine doppelt-lange Stiftbewegung bedeutungslos, was zusätzliche Unterscheidungskriterien erübrigt. Der Programmablauf wird dadurch vereinfacht. Die Texterkennung wird nahezu eindeutig und vermeidet Fehlzuordnungen und Fehlinterpretationen. Ausserdem wird für den Benützer die Eingabe vereinfacht, weil er nicht auf die Strichlänge achten muss. Doppelte Vokale können durch die achte Strichrichtung - wie in Fig. 4 beschrieben - erzeugt werden.
In ähnlicher Weise werden in den Schritten 1312 bis 1318 die Strichrichtungen '2' bis '8' ermittelt und die entsprechenden Informationen zum Verarbeitungsmodul gesendet. Danach wird in Schritt 1310 geprüft, ob der Stift angehoben wurde. Falls 'Ja', endet der Programmabschnitt mit 'Return' (Schritt 1307), worauf bei 'Start' weitergefahren wird.
Lag in Schritt 1310 ein 'Nein' vor, so wird mit Schritt 1309 weitergefahren.

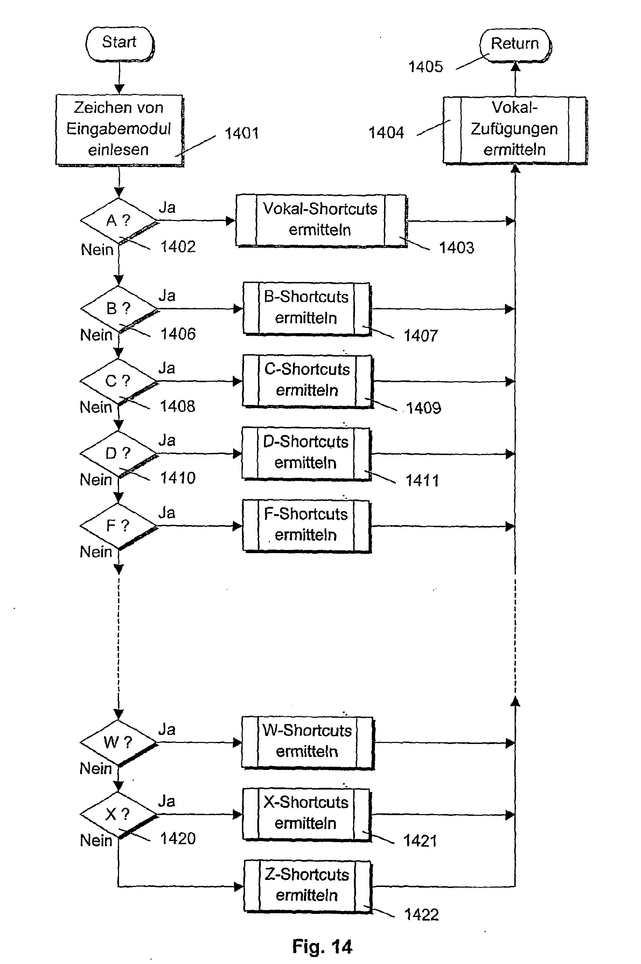

Fig. 14 zeigt ein Flussdiagramm als Übersicht für das Verarbeitungsmodul mit Hinweisen auf die damit zusammenhängenden weiteren Flussdiagramme.
Die im Eingabemodul erzeugten Steuerzeichen werden vom Verarbeitungsmodul eingelesen und verarbeitet. Die Verarbeitung der Steuerzeichen startet mit dem Empfang eines Steuerzeichens vom Eingabemodul (Schritt 1401).

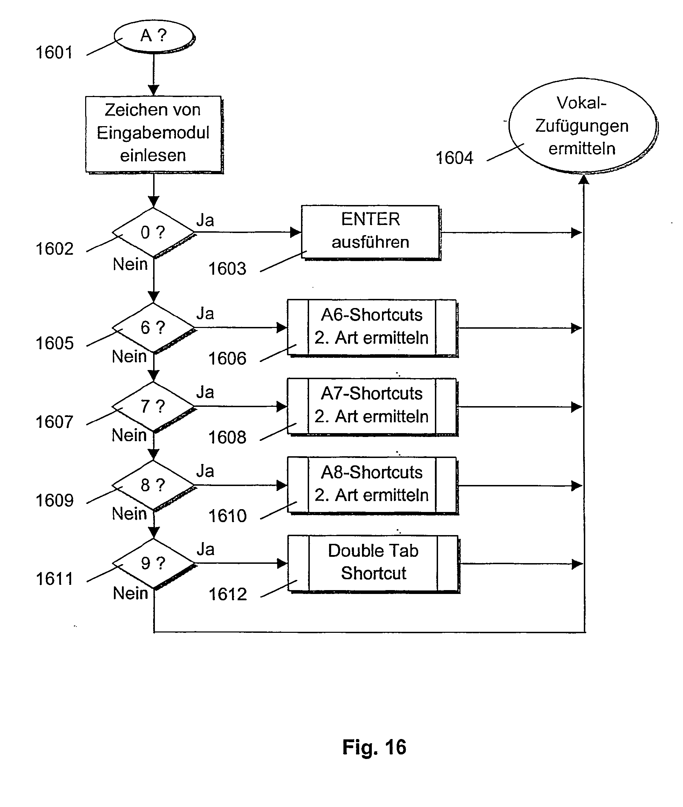

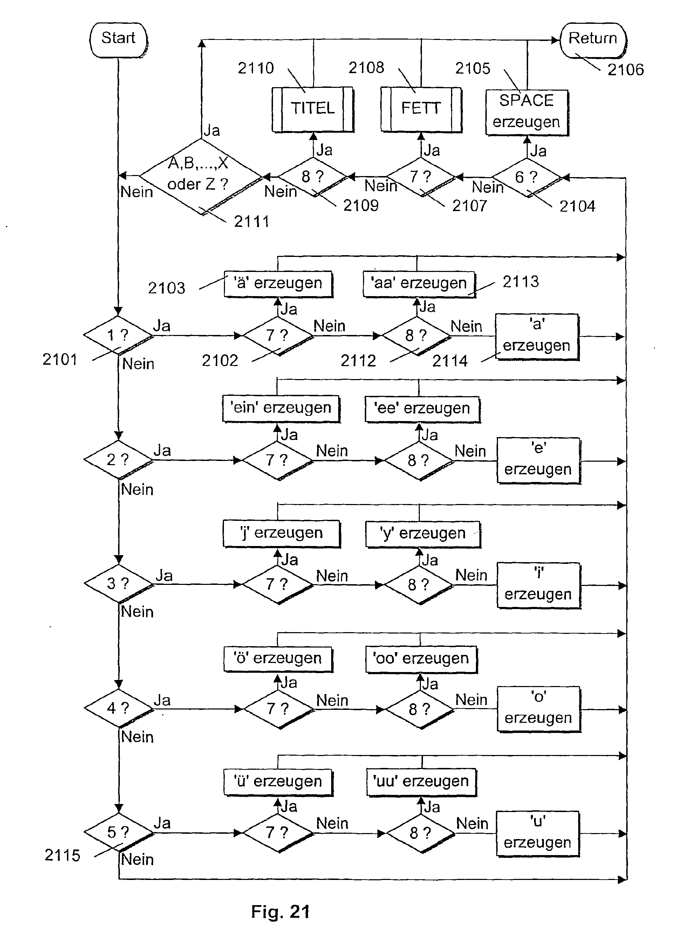

Danach wird geprüft, ob es sich um das Steuerzeichen 'A' handelt (Schritt 1402). Falls 'Ja', werden in Schritt 1403 die Vokal-Shortcuts ermittelt, was im Flussdiagramm in Fig. 16 beschrieben wird. Falls Menüfenster angezeigt werden sollen, werden diese zwischen den Schritten 1402 und 1403 ausgelöst. So erscheint beispielsweise das Neuner-Fenster (Fig. 10A) oder das Fünfer-Fenster (Fig. 10B), falls die mittlere Variante der Lernhilfe gewählt wurde.
Danach werden in Schritt 1404 die Vokal-Zufügungen ermittelt, was im Flussdiagramm in Fig. 21 beschrieben wird. Danach endet das Verfahren mit 'Return' (Schritt 1405), worauf bei 'Start' weitergefahren wird.
Lag in Schritt 1402 ein 'Nein' vor, so wird in Schritt 1406 geprüft, ob es sich um das Steuerzeichen 'B' handelt. Falls 'Ja', werden in Schritt 1407 die B-Shortcuts ermittelt, was später am Beispiel des Z-Shortcuts beschrieben wird. Danach werden in Schritt 1404 wiederum die Vokal-Zufügungen ermittelt, wonach das Verfahren mit 'Return' endet (Schritt 1405), worauf bei 'Start' weitergefahren wird.
Lag in Schritt 1406 ein 'Nein' vor, so wird in Schritt 1408 geprüft, ob es sich um das Steuerzeichen 'C' handelt. Falls 'Ja', werden in Schritt 1409 die C-Shortcuts ermittelt. Danach werden in Schritt 1404 wiederum die Vokal-Züfügungen ermittelt, wonach das Verfahren mit 'Return' endet (Schritt 1405).

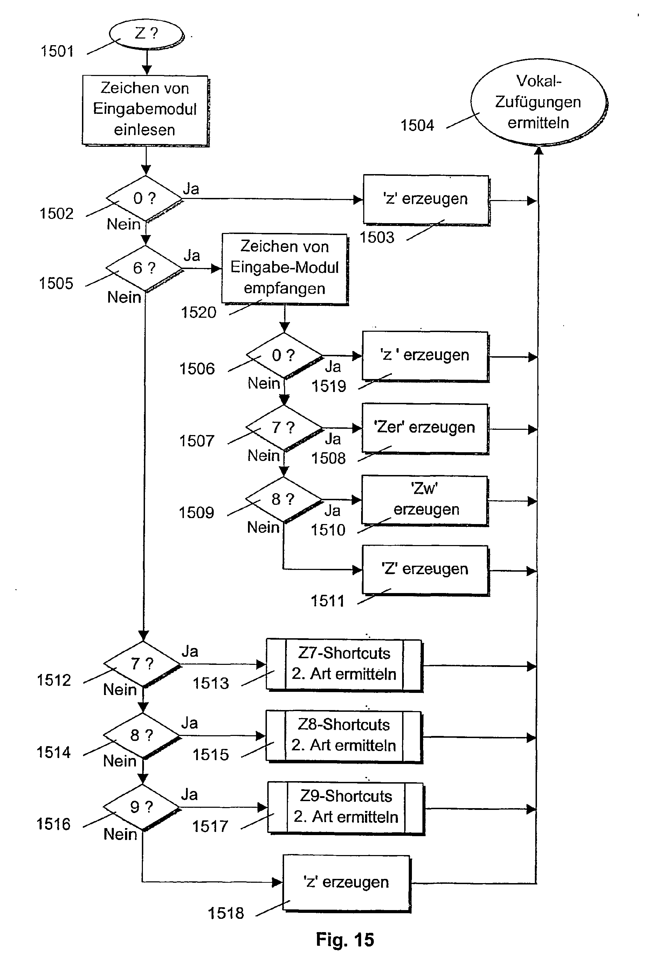

In analoger Weise wird nun auf die Steuerzeichen 'D' bis 'X' in den Schritten 1410 bis 1420 geprüft, wobei die jeweils entsprechenden Konsonant-Shortcuts in den Schritten 1411 bis 1421 oder 1422 ermittelt werden, gefolgt von den Vokal-Zufügungen (Schritt 1404) und dem 'Return' (Schritt 1405).
Lag in Schritt 1420 ein 'Nein' vor, so werden in Schritt 1422 die Z-Shortcuts ermittelt, was im Flussdiagramm in Fig. 15 beschrieben wird.

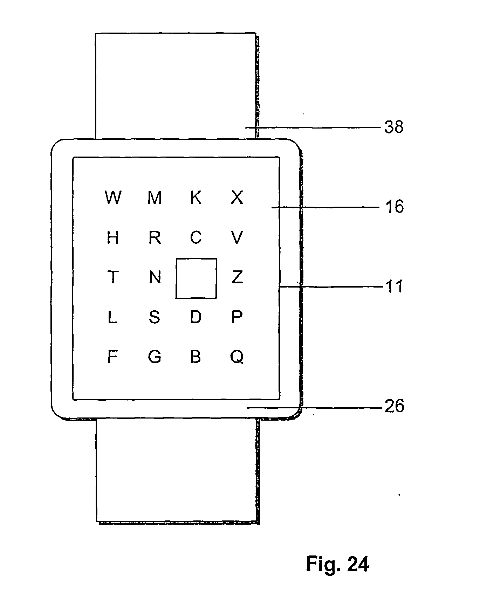

Fig. 15 zeigt ein Flussdiagramm zur Ermittlung der Konsonant-Shortcuts, nämlich des Z-Shortcuts. Dieser Abschnitt des Programms startet mit dem Schritt 1501, bei welchem das Steuerzeichen 'Z' erkannt wurde.
Diese Steuerzeichen werden im Eingabemodul erzeugt und vom Verarbeitungsmodul eingelesen und verarbeitet.
Danach wird in Schritt 1502 geprüft, ob es sich um das Steuerzeichen '0' handelt. Falls 'Ja', wird der Buchstabe 'z' erzeugt (Schritt 1503) und danach die Vokal-Zufügungen ermittelt (Schritt 1504).
Lag in Schritt 1502 ein 'Nein' vor, so wird in Schritt 1505 geprüft, ob es sich um das Steuerzeichen '6' handelt. Falls 'Ja', wird ein weiteres Steuerzeichen vom Eingabemodul empfangen (Schritt 1520). Falls Menüfenster angezeigt werden sollen, werden diese zwischen den Schritten 1505 und 1520 ausgelöst. So erscheint beispielsweise das Neuner-Fenster (Fig. 10A) oder das Fünfer-Fenster (Fig. 10B), falls die mittlere Variante der Lernhilfe gewählt wurde.
Danach wird in Schritt 1506 geprüft, ob es sich um das Steuerzeichen '0' handelt.
Falls'Ja', wird der Buchstabe'z', gefolgt von einem Leerschlag, erzeugt (Schritt 1519) und danach die Vokal-Zufügungen ermittelt (Schritt 1504).
Lag in Schritt 1506 ein 'Nein' vor, so wird in Schritt 1507 geprüft, ob es sich um das Steuerzeichen '7' handelt. Falls 'Ja', wird die Silbe 'Zer' erzeugt (Schritt 1508) und danach die Vokal-Zufügungen ermittelt (Schritt 1504).
Lag in Schritt 1507 ein 'Nein' vor, so wird in Schritt 1509 geprüft, ob es sich um das Steuerzeichen '8' handelt. Falls 'Ja', wird die Buchstabenfolge 'Zw' erzeugt (Schritt 1510) und danach die Vokal-Zufügungen ermittelt (Schritt 1504).
Lag in Schritt 1509 ein 'Nein' vor, so wird der Buchstabe 'Z' erzeugt (Schritt 1511) und danach die Vokal-Zufügungen ermittelt (Schritt 1504).
Lag in Schritt 1505 ein 'Nein' vor, so wird in Schritt 1512 geprüft, ob es sich um das Steuerzeichen '7' handelt. Falls 'Ja', werden die Z7-Shortcuts 2. Art ermittelt (Schritt 1513), was im Flussdiagramm Fig. 24B am Beispiel der A7-Shortcuts 2. Art beschrieben wird. Danach werden die Vokal-Zufügungen ermittelt (Schritt 1504).
Lag in Schritt 1512 ein 'Nein' vor, so wird in Schritt 1514 geprüft, ob es sich um das Steuerzeichen '8' handelt. Falls 'Ja', werden die Z8-Shortcuts 2. Art ermittelt (Schritt 1515), und danach die Vokal-Zufügungen ermittelt (Schritt 1504).
Lag in Schritt 1514 ein 'Nein' vor, so wird in Schritt 1516 geprüft, ob es sich um das Steuerzeichen '9' handelt. Falls 'Ja', werden die Z9-Shortcuts ermittelt (Schritt 1517) und danach die Vokal-Zufügungen ermittelt (Schritt 1504).
Lag in Schritt 1516 ein 'Nein' vor, so wird in Schritt 1518 der Buchstabe 'z' erzeugt und danach die Vokal-Zufügungen ermittelt (Schritt 1504).
Die Flussdiagramme zu den Konsonant-Shortcuts werden am Beispiel des Z-Shortcuts beschrieben. Sie unterscheiden sich nur inhaltlich und sind in ihrer Struktur identisch. Der Inhalt der Z7-, Z8- und Z9-Shortcuts 2. Art ist in Fig. 11B ersichtlich.

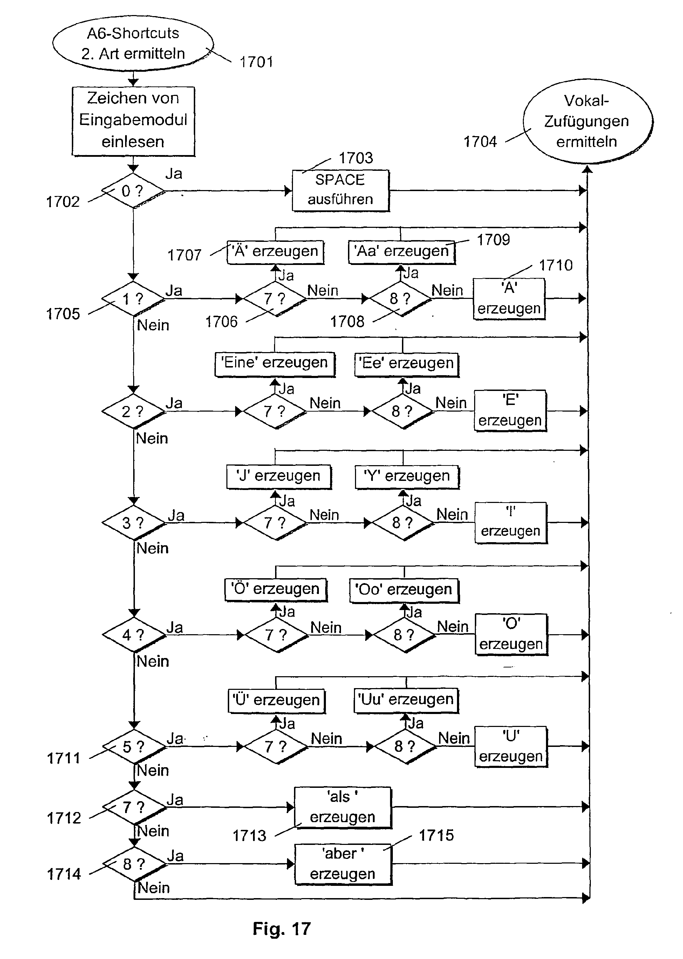

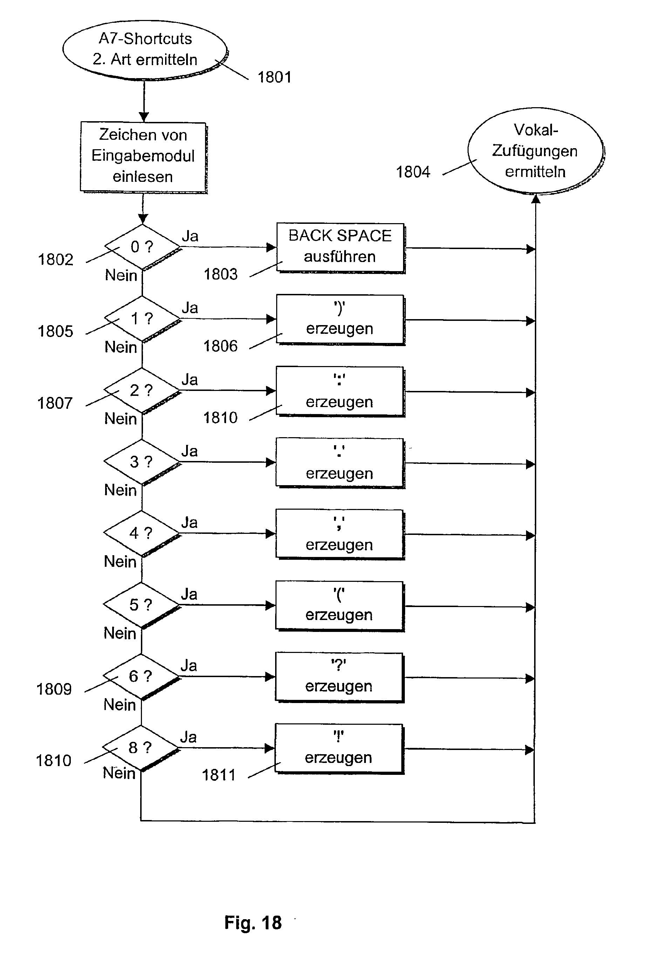

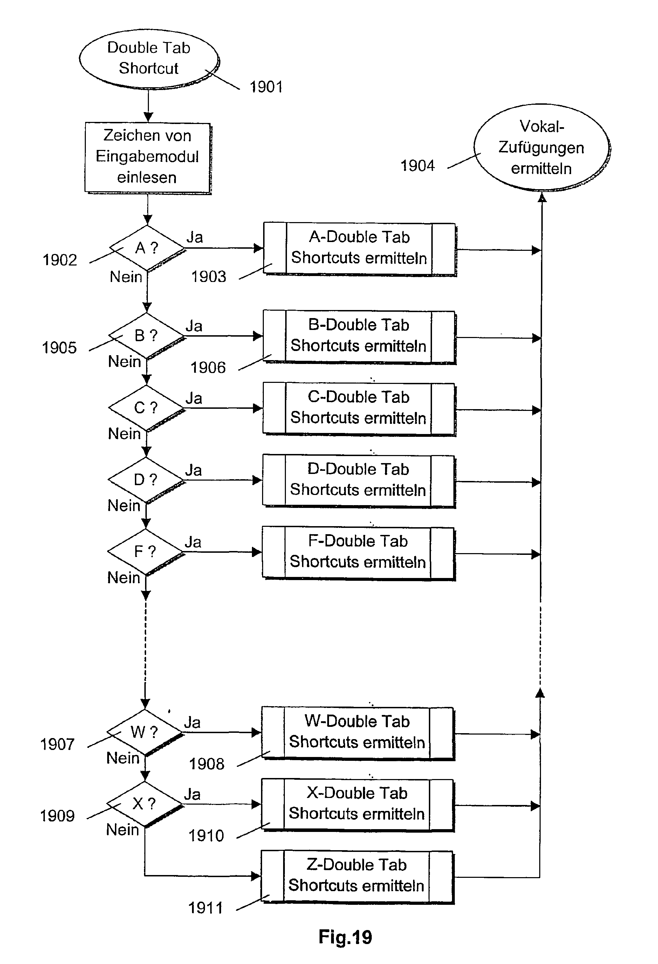

Fig. 16 zeigt ein Flussdiagramm zur Ermittlung der Vokal-Shortcuts. Dieser Abschnitt des Programms startet mit dem Schritt 1601, bei welchem das Steuerzeichen 'A' erkannt wurde. Diese Steuerzeichen werden im Eingabemodul erzeugt und vom Verarbeitungsmodul eingelesen und verarbeitet.
Danach wird in Schritt 1602 geprüft, ob es sich um das Steuerzeichen '0' handelt. Falls 'Ja', wird die Funktion 'ENTER' ausgeführt (Schritt 1603) und danach die Vokal-Zufügungen ermittelt (Schritt 1604).
Lag in Schritt 1602 ein 'Nein' vor, so wird in Schritt 1605 geprüft, ob es sich um das Steuerzeichen '6' handelt. Falls 'Ja', werden die A6-Shortcuts 2. Art ermittelt (Schritt 1606), was im Flussdiagramm Fig. 17 beschrieben wird. Danach werden die Vokal-Zufügungen ermittelt (Schritt 1604).
Lag in Schritt 1605 ein 'Nein' vor, so wird in Schritt 1607 geprüft, ob es sich um das Steuerzeichen '7' handelt. Falls 'Ja', werden die A7-Shortcuts 2. Art ermittelt (Schritt 1608), was im Flussdiagramm Fig. 18 beschrieben wird. Danach werden die Vokal-Zufügungen ermittelt (Schritt 1604).
Lag in Schritt 1607 ein 'Nein' vor, so wird in Schritt 1609 geprüft, ob es sich um das Steuerzeichen '8' handelt. Falls 'Ja', werden die A8-Shortcuts 2. Art ermittelt (Schritt 1610) und danach die Vokal-Zufügungen ermittelt (Schritt 1604).
Lag in Schritt 1609 ein 'Nein' vor, so wird in Schritt 1611 geprüft, ob es sich um das Steuerzeichen '9' handelt. Falls'Ja', werden die Double Tab Shortcuts ermittelt (Schritt 1612), was im Flussdiagramm Fig. 19 beschrieben wird. Danach werden die Vokal-Zufügungen ermittelt (Schritt 1604).
Lag in Schritt 1611 ein 'Nein' vor, so werden die Vokal-Zufügungen ermittelt (Schritt 1604).
Menüfenster werden - ähnlich wie in Fig. 15 beschrieben - gemäss Fig. 10B angezeigt.

Fig. 17 zeigt ein Flussdiagramm zur Ermittlung der A6-Shortcuts 2. Art. Dieser Abschnitt des Programms startet mit dem Schritt 1701, bei welchem nach Schritt 1602 (Fig. 16) das Steuerzeichen '6' erkannt wurde. Diese Steuerzeichen werden im Eingabemodul erzeugt und vom Verarbeitungsmodul eingelesen und verarbeitet. Danach wird in Schritt 1702 geprüft, ob es sich um das Steuerzeichen '0' handelt. Falls 'Ja', wird die Funktion 'SPACE' ausgeführt (Schritt 1703) und danach die Vokal-Zufügungen ermittelt (Schritt 1704).

Lag in Schritt 1702 ein 'Nein' vor, so wird in Schritt 1705 geprüft, ob es sich um das Steuerzeichen '1' handelt. Falls 'Ja', so wird ein weiteres Steuerzeichen eingelesen (nicht dargestellt) und in Schritt 1706 geprüft, ob es sich um das Steuerzeichen '7' handelt. Falls 'Ja', wird der Umlaut 'Ä' erzeugt (Schritt 1707) und danach die Vokal-Zufügungen ermittelt (Schritt 1704).
Lag in Schritt 1706 ein 'Nein' vor, so wird in Schritt 1708 geprüft, ob es sich um das Steuerzeichen '8' handelt. Falls 'Ja', wird der Doppel-Vokal 'Aa' erzeugt (Schritt 1709) und danach die Vokal-Zufügungen ermittelt (Schritt 1704).
Lag in Schritt 1708 ein 'Nein' vor, wird der Buchstabe 'A' in Gross-Schrift erzeugt (Schritt 1710) und danach die Vokal-Zufügungen ermittelt (Schritt 1704).
In strukturell analoger Weise wird nun im weiteren geprüft, ob es sich um die Steuerzeichen '2', '3', '4' oder '5' handelt, wobei jeweils die entsprechenden Umlaute, Doppel-Vokale, bzw. der Buchstabe 'Y', 'J', bzw. das Wort 'eine' oder die Buchstaben in Gross-Schrift erzeugt werden, was nicht näher beschrieben wird.
Lag schliesslich in Schritt 1711 ein 'Nein' vor, so wird in Schritt 1712 geprüft, ob es sich um das Steuerzeichen '7' handelt. Falls 'Ja', wird das Wort 'als ', gefolgt von einem Leerschlag, erzeugt (Schritt 1713) und danach die Vokal-Zufügungen ermittelt (Schritt 1704).
Lag in Schritt 1712 ein 'Nein' vor, so wird in Schritt 1714 geprüft, ob es sich um das Steuerzeichen '8' handelt. Falls 'Ja', wird das Wort 'aber ', gefolgt von einem Leerschlag, erzeugt (Schritt 1715) und danach die Vokal-Zufügungen ermittelt (Schritt 1704).
Lag in Schritt 1714 ein 'Nein' vor, werden die Vokal-Zufügungen ermittelt (Schritt 1704).

Fig. 18 zeigt ein Flussdiagramm zur Ermittlung der A7-Shortcuts 2. Art. Dieser Abschnitt des Programms startet mit dem Schritt 1801, bei welchem nach Schritt 1605 (Fig. 16) das Steuerzeichen '7' erkannt wurde. Diese Steuerzeichen werden im Eingabemodul erzeugt und vom Verarbeitungsmodul eingelesen und verarbeitet. Danach wird in Schritt 1802 geprüft, ob es sich um das Steuerzeichen '0' handelt.
Falls 'Ja', wird die Funktion 'BACK SPACE' ausgeführt (Schritt 1803) und danach die Vokal-Zufügungen ermittelt (Schritt 1804).
Lag in Schritt 1802 ein 'Nein' vor, so wird in Schritt 1805 geprüft, ob es sich um das Steuerzeichen '1' handelt. Falls 'Ja', wird das Spezialzeichen ')' erzeugt (Schritt 1806) und danach die Vokal-Zufügungen ermittelt (Schritt 1804).
Lag in Schritt 1805 ein 'Nein' vor, so wird in Schritt 1807 geprüft, ob es sich um das Steuerzeichen '2' handelt. Falls 'Ja', wird das Spezialzeichen ':' erzeugt (Schritt 1810) und danach die Vokal-Zufügungen ermittelt (Schritt 1804).
In strukturell analoger Weise wird nun im weiteren geprüft, ob es sich um die Steuerzeichen '3', '4', '5' oder '6' handelt, wobei jeweils die entsprechenden Spezialzeichen erzeugt werden, was nicht näher beschrieben wird.
Lag schliesslich in Schritt 1809 ein 'Nein' vor, so wird in Schritt 1810 geprüft, ob es sich um das Steuerzeichen '8' handelt. Falls 'Ja', wird das Spezialzeichen '!' erzeugt (Schritt 1811) und danach die Vokal-Zufügungen ermittelt (Schritt 1804).
Lag in Schritt 1810 ein 'Nein' vor, werden die Vokal-Zufügungen ermittelt (Schritt 1804).

Die Flussdiagramme zu den A7- bis Z7-Shortcuts 2. Art und die Flussdiagramme zu den A8- bis Z8-Shortcuts 2. Art unterscheiden sich nur inhaltlich. Sie sind in ihrer Struktur identisch.

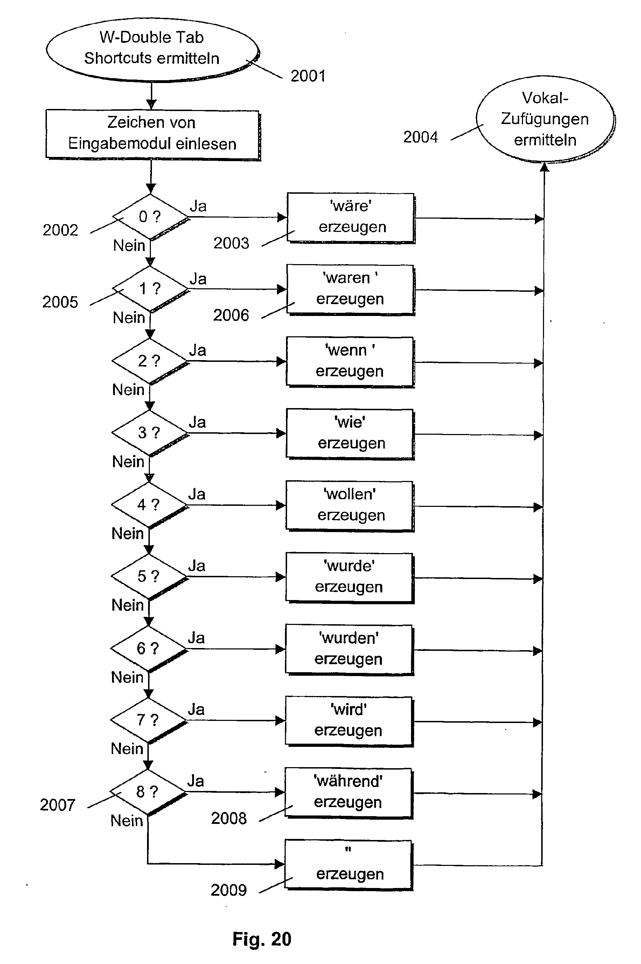

Fig. 19 zeigt ein Flussdiagramm zur Ermittlung der Double Tab Shortcuts. Dieser Abschnitt des Programms startet nach erfolgtem Double Tab auf der Vokal-Taste (Schritt 1901) mit dem Absetzen des Stiftes auf irgendeiner Taste. Diese Steuerzeichen werden im Eingabemodul erzeugt und vom Verarbeitungsmodul eingelesen und verarbeitet.
Danach wird in Schritt 1902 geprüft, ob es sich um das Steuerzeichen 'A' handelt. Falls 'Ja', werden die A-Double Tab Shortcuts ermittelt (Schritt 1903), wonach die Vokal-Zufügungen ermittelt werden (Schritt 1904).
Lag in Schritt 1902 ein 'Nein' vor, so wird in Schritt 1905 geprüft, ob es sich um das Steuerzeichen 'B' handelt. Falls 'Ja', werden die B-Double Tab Shortcuts ermittelt (Schritt 1906), wonach die Vokal-Zufügungen ermittelt werden (Schritt 1904).
In strukturell analoger Weise wird nun im weiteren geprüft, ob es sich um die Steuerzeichen 'C' bis 'W' handelt, wobei jeweils die entsprechenden Double Tab Shortcuts ermittelt werden, wonach die Vokal-Zufügungen ermittelt werden (Schritt 1904) und was nicht näher beschrieben wird.
So wird in Schritt 1907 geprüft, ob es sich um das Steuerzeichen 'W' handelt. Falls 'Ja', werden die W-Double Tab Shortcuts ermittelt (Schritt 1908), was im Flussdiagramm Fig. 20 beschrieben wird. Danach werden die Vokal-Zufügungen ermittelt (Schritt 1904).
Lag in Schritt 1907 ein 'Nein' vor, so wird in Schritt 1909 geprüft, ob es sich um das Steuerzeichen 'X' handelt. Falls 'Ja', werden die X-Double Tab Shortcuts ermittelt (Schritt 1910), wonach die Vokal-Zufügungen ermittelt werden (Schritt 1904).
Lag in Schritt 1909 ein 'Nein' vor, werden die Z-Double Tab Shortcuts ermittelt (Schritt 1911), wonach die Vokal-Zufügungen ermittelt werden (Schritt 1904).

Fig. 20 zeigt ein Flussdiagramm zur Ermittlung der W-Double Tab Shortcuts. Dieser Abschnitt des Programms startet mit Schritt 2001. Dieser folgt auf Schritt 1907 (Fig. 19), falls das Steuerzeichen 'W' erkannt wurde.
Diese Steuerzeichen werden im Eingabemodul erzeugt und vom Verarbeitungsmodul eingelesen und verarbeitet.
Danach wird in Schritt 2002 geprüft, ob es sich um das Steuerzeichen '0' handelt. Falls 'Ja', wird das Wort 'wäre' erzeugt (Schritt 2003), wonach die Vokal-Zufügungen ermittelt werden (Schritt 2004).
Lag in Schritt 2002 ein 'Nein' vor, so wird in Schritt 2005 geprüft, ob es sich um das Steuerzeichen '1' handelt. Falls 'Ja', wird das Wort 'waren' erzeugt (Schritt 2006), wonach die Vokal-Zufügungen ermittelt werden (Schritt 2004).
In strukturell analoger Weise wird nun im weiteren geprüft, ob es sich um die Steuerzeichen '2' bis '8' handelt, wobei jeweils die entsprechenden Wörter erzeugt werden, wonach jeweils die Vokal-Zufügungen ermittelt werden (Schritt 2004) und was nicht näher beschrieben wird.
So wird in Schritt 2007 geprüft, ob es sich um das Steuerzeichen '8' handelt. Falls 'Ja', wird das Wort 'während' erzeugt (Schritt 2008), wonach die Vokal-Zufügungen ermittelt werden (Schritt 2004).
Lag in Schritt 2007 ein 'Nein' vor, wird kein Wort erzeugt (was mit dem Zeichen " angedeutet ist), sofern an dieser Stelle noch kein persönliches Wort plaziert wurde (Schritt 2009). Danach werden die Vokal-Zufügungen ermittelt (Schritt 2004).

Fig. 21 zeigt ein Flussdiagramm zur Verarbeitung von Vokal-Zufügungen. In diesem Abschnitt des Programms werden im Wesentlichen die Steuerzeichen verarbeitet, die Vokale oder einen Leerschlag zur Folge haben. Die Steuerzeichen 7 und 8 bewirken eine spezielle Funktion, die z.B. das gerade geschriebene Wort fett, in grosser Schrift oder in kursiver Schrift erzeugt und einen Leerschlag einfügt. Durch eine Programmschleife sind alle Kombinationen möglich, mit denen Vokale aneinandergereiht werden können.
Gleich vor Schritt 2101 wird vom Eingabemodul ein Steuerzeichen eingelesen (nicht dargestellt).
Im Schritt 2101 wird geprüft, ob das Steuerzeichen '1' eingelesen wurde. Falls 'Ja', wird zwischen den Schritten 2101 und 2102 vom Eingabemodul ein Steuerzeichen eingelesen (nicht dargestellt), und danach geprüft, ob das Steuerzeichen '7' eingelesen wurde (Schritt 2102). Falls'Ja', wird der Umlaut ä erzeugt (Schritt 2103) und in Schritt 2104 geprüft, ob das Steuerzeichen '6' eingelesen wurde. Falls'Ja', wird die Funktion 'SPACE' ausgeführt (Schritt 2105), wonach der Programmabschnitt mit 'Return' endet (Schritt 2106).
Lag in Schritt 2104 ein 'Nein' vor, so wird in Schritt 2107 geprüft, ob das Steuerzeichen '7' eingelesen wurde. Falls'Ja', wird das eben geschriebene, bzw. erzeugte Wort durch das gleiche Wort in Fett-Schreibung ersetzt (Schritt 2108), wonach der Programmabschnitt mit 'Return' endet (Schritt 2106).
Lag in Schritt 2107 ein 'Nein' vor, so wird in Schritt 2109 geprüft, ob das Steuerzeichen '8' eingelesen wurde. Falls'Ja', wird das eben geschriebene, bzw. erzeugte Wort durch das gleiche Wort etwas grösser als Titel und in Fett-Schreibung ersetzt (Schritt 2110), wonach der Programmabschnitt mit 'Return' endet (Schritt 2106).
Lag in Schritt 2109 ein 'Nein' vor, so wird in Schritt 2111 geprüft, ob es sich um ein Steuerzeichen handelt, das durch Tastendruck erzeugt wurde (A, B, ..., Z). Falls 'Ja', endet der Programmabschnitt mit 'Return' (Schritt 2106).
Lag in Schritt 2111 ein 'Nein' vor, so wird die Programmschleife geschlossen, indem als nächstes wieder ein Steuerzeichen eingelesen und Schritt 2101 ausgeführt wird. Lag in Schritt 2102 ein 'Nein' vor, so wird in Schritt 2112 geprüft, ob das Steuerzeichen '8' eingelesen wurde. Falls 'Ja', wird der Doppel-Vokal 'aa' erzeugt (Schritt 2113) und in Schritt 2104 weitergefahren.
Lag in Schritt 2112 ein 'Nein' vor, wird der Buchstabe 'a' erzeugt (Schritt 2114) und in Schritt 2104 weitergefahren.
In strukturell analoger Weise wird nun im weiteren geprüft, ob es sich um die Steuerzeichen '2' bis '5' handelt, wobei jeweils die entsprechenden Umlaute, Doppel-Vokale, bzw. Spezialzeichen, oder Konsonanten erzeugt werden, wonach jeweils in Schritt 2104 weitergefahren wird und was nicht näher beschrieben wird.
Lag in Schritt 2115 ein 'Nein' vor, so wird mit Schritt 2104 weitergefahren.

Durch die Anwendung der acht Strichrichtungen, den Tab und den Double Tab, können die Tasten für Vokale, Umlaute, j, y, den Leerschlag, die Interpunktionszeichen und die Zahlen weggelassen werden. Deshalb werden nur 40-50% der Tasten einer QWERTY-Tastatur benötigt und dargestellt, weshalb das Tastenfeld sehr übersichtlich ist (kleine Suchzone) und mit dem Stift nur sehr kurze Wege zurückgelegt werden müssen. Die Vokale und der Leerschlag machen 50% der Tipp-Vorgänge aus. Indem man sich diese sechs Strichrichtungen merkt, erspart sich der Benützer in all diesen Fällen das Suchen der Taste und den Weg zur Taste.

Vokalverbindungen machen einen grossen Teil der Sprache aus. Das Schnellschreibverfahren ermöglicht, dass die verschiedenen Strichrichtungen wie der Stift geführt werden kann, ohne Absetzen aneinandergereiht werden könnnen. Dadurch erfolgt die Eingabe von z.B. 'au', 'ei' oder 'eue' sehr rasch und einfach.

Die sieben Konsonanten die sich in unmittelbarer Nachbarschaft der zentralen N-Taste befinden (Tastenfeld für die deutsche Sprache) inklusive der Konsonant N selbst, machen häufigkeitsgemäss 48% der Buchstaben aus. Somit wird fast die Hälfte der Tipp-Vorgänge innerhalb dieser Kernzone ausgeführt.

Damit hat diese Kombination von Tastendruck und einfachsten, kombinierbaren 'Schriftzeichen' (Strokes, Tabs und Double Tabs) erstaunliche Vorteile zur Folge.

Diese On-Screen-Tastatur ist für kleine Monitore speziell geeignet ('Uhr', Mobiltelephone, SMS, WAP). Sie weist nur fünf Prozent der Fläche einer QWERTY-Tastatur (für Zehnfinger-Anwendung) auf, was auch eine massive Gewichtsersparnis bedeutet. Im Gegensatz zum Verfahren - wie von Nokia verwendet - muss bei der Eingabe der eben geschriebene Text nicht sichtbar sein. Was die Anwendung für Uhren vereinfacht und einen zusätzlichen Gewinn bei engen Raumverhältnissen bringt (Diskretion).

Die Belegung der acht Strichrichtungen ist sehr einprägsam: Die Abwärtsrichtung ist mit dem I besetzt, weil das I auch von oben nach unten geschrieben wird. Die Vokale sind in alphabetischer Reihenfolge dem Uhrzeigersinn nach geordnet. Sie liegen alle auf der horizontalen Achse und darunter. Die drei Strichrichtungen die darüber liegen sind für andere Funktionen reserviert. Die Umlaute zum Beispiel werden mit einer Strichrichtung 'nach oben' gekennzeichnet, weil die Pünktchen über dem Ä, Ö oder Ü liegen, was auch in anderen Sprachen ähnlich der Fall ist (é, è oder à). Auch in sonstiger Hinsicht ist das Verfahren an alle Sprachen mit Laut-Alphabet anpassbar.

Die Handauflage liegt auf der gleichen Ebene wie der Monitor, wodurch eine entspannte Handstellung gewährleistet ist. Durch die bequeme Handauflage kann der Stift nur durch Bewegung der Finger präzise geführt werden. Die Hand muss im Gegensatz zur Langschrift (Handschrift) und der Kurzschrift (z.B. nach Stolze/Schrey) nicht geführt werden, wodurch weniger Platz benötigt wird (der Arm wird nicht bewegt) und der Schreibprozess weniger anstrengend ist. Ausserdem ist das Schreiben ist stehender Position problemlos durchführbar, was neue Einsatzmöglichkeiten eröffnet. z.B. für Journalisten.

Bei vergleichbarem Übungsaufwand kann wesentlich schneller geschrieben werden als mit der QWERTY-Tastatur.

Das bekannte Schriftbild wird mit Berücksichtigung von Gross-/Klein-Schreibung und der gesamten Orthographie verschriftlicht, weshalb kein neues, verkürztes und falsches Schriftbild verinnerlicht werden muss, wie dies beim Stenographieren nach Stolze/ Schrey der Fall ist. Der geschriebene Text muss auch nicht mühsam entziffert werden, sondern ist elektronisch erfasst und weiterverwendbar. Während dem Schreibprozess muss nie von einer Liste mit vorgeschlagenen Wörtern ausgewählt werden, wodurch der Benützer seine Aufmerksamkeit ausschliesslich auf das Eingabefeld lenken muss.

Die Shortcuts und Double Tab Shortcuts ermöglichen die abgekürzte Eingabe von ganzen Wörtern. Der Satz der hundert häufigsten Wörter steht abrufbereit zur Verfügung. Diese hundert Wörter machen 50% der geschriebenen Sprache aus. Die fünfzig Häufigsten machen 45% aus.

Die Darstellung dieser Wörter mit Menüfenster (z.B. Neuner-Fenster) und die einfache zu den Strichrichtungen passenden Zuordnung der Wortplazierung hat eine überraschende Beschleunigung des Schreibprozesses und Lernfortschrittes zur Folge. Es stehen noch viele freie Plätze für persönliche Wörter zur Verfügung, wodurch ein zum Wort passender, leicht merkbarer Shortcut oder Double Tab Shortcut gewährleistet ist. Auch wenn dem Benützer nur die Grundfunktionen geläufig sind, kann das Schnellschreibgerät gewinnbringend eingesetzt werden.

Wird auf der Q-Taste ein Tab ausgeführt, so wird der Buchstabe 'q' gefolgt vom Buchstaben 'u' erzeugt, da in der deutscher Sprache q immer von u gefolgt ist.

Worte, die mit grosser Wahrscheinlichtkeit nie verändert werden, sind mit Leerschlag abgespeichert (z.B. als, aber, dass), was eine Arbeitsersparnis zur Folge hat. Worte die manchmal durch direkt dahinter angefügte Buchstaben erweitert werden (z.B. andere, bisherige, keine, sagte), sind ohne Leerschlag abgespeichert.

Durch den einfachen Zeichensatz ist eine praktisch 100%-Erkennung der Eingabe gewährleistet. Dadurch ist die relativ ungenaue Eingrenzung mit statistischen Mitteln unter Zuhilfenahme eines umfangreichen Wörterbuchs nicht nötig, wodurch wenig Speicherplatz benötigt wird. Durch den einfachen Aufbau des kurzen Programms ist eine unverzögerte Anzeige des eingegeben Texts gewährleistet.

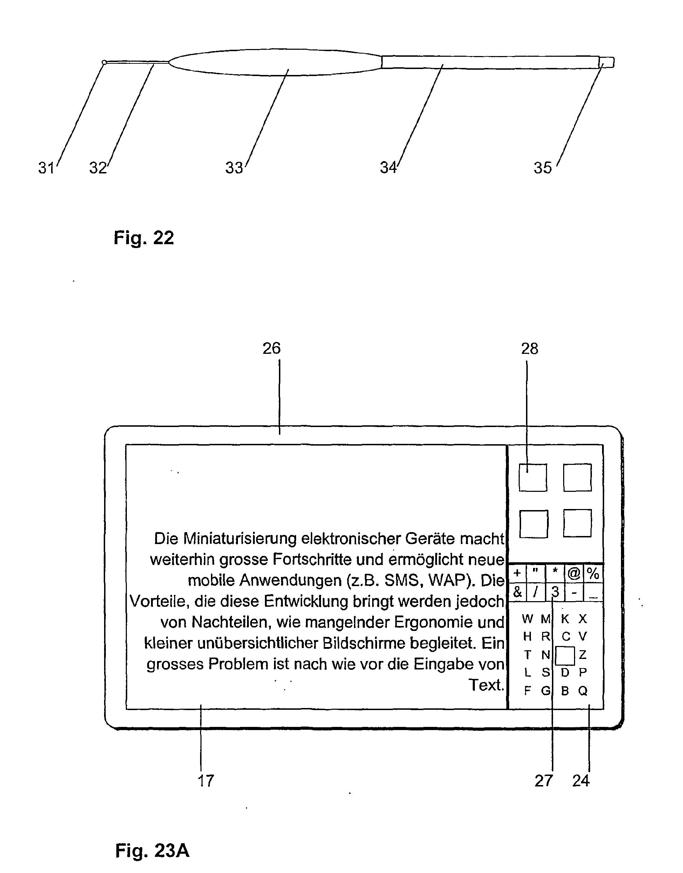

Fig. 22 zeigt einen Stift, bzw. einen Griffel zum Schnellschreibgerät, mit dem Tasten auf dem Touchscreen angewählt und Strichrichtungen geführt werden. Mit dem Stift werden Stiftbewegungen ausgeführt, ohne dass es sich dabei um ein Schreibgerät im ursprünglichen Sinne handelt.
Ein leicht gewölbter Griffteil 33 weist am eine Ende eine Spitze 32 auf, die in einer kugelförmigen oder gerundeter Spitze 31 endet. Die Spitze 32 ist so dünn wie möglich ausgebildet und wird vorteilhafterweise aus Stahl gefertigt. Am anderem Ende des Griffteils 33 befindet sich eine zylindrische Verlängerung 34, die ihrerseits mit einem knopfartigen Abschlussteil 35 endet. Durch Knopfdruck auf den Abschlussteil 35 werden die Bauteile 32 und 34 in den Griffteil, resp. den Handgriff 33 geschoben und auf Knopfdruck wieder auseinandergezogen. Die spezielle Formgebung ermöglicht eine verbesserte Sicht auf das Tastenfeld, was vor allem beim Schreiben mit Menüfenstern von Nutzen ist.

Fig. 23A zeigt als erstes Ausführungsbeispiel ein 'Palmtop' als Schnellschreibgerät. Der Monitor weist ein Eingabefeld und ein Textfeld 17 auf. Der Monitor ist in einem Gehäuse 26 eingelassen. Das Eingabefeld ist unterteilt in ein Tastenfeld 24, in ein Sondertastenfeld 27 mit einer Zahlentaste und in ein darüber angeordnetes weiteres Feld, in dem lkons 28 untergebracht sind. Im Tastenfeld 24 sind die Vokal-Taste und die darumherum angeordneten Konsonant-Tasten erkennbar. Eine derartige Aufteilung des Monitors ist besonders vorteilhaft für Rechtshänder. Diese pflegen die Eingaben auf der rechten Monitorfläche zu tätigen, während auf der linken Seite der jeweilige Text erscheint.
Die lkons sind für häufig aufrufbare Programmfunktionen vorgesehen. Dies ist bekannt von üblichen Schaltflächen, wie sie etwa in Organizer-Anwendungen anzutreffen sind, etwa mit den Bezeichnungen Termine, Adresskartei, Taschenrechner und dergleichen.

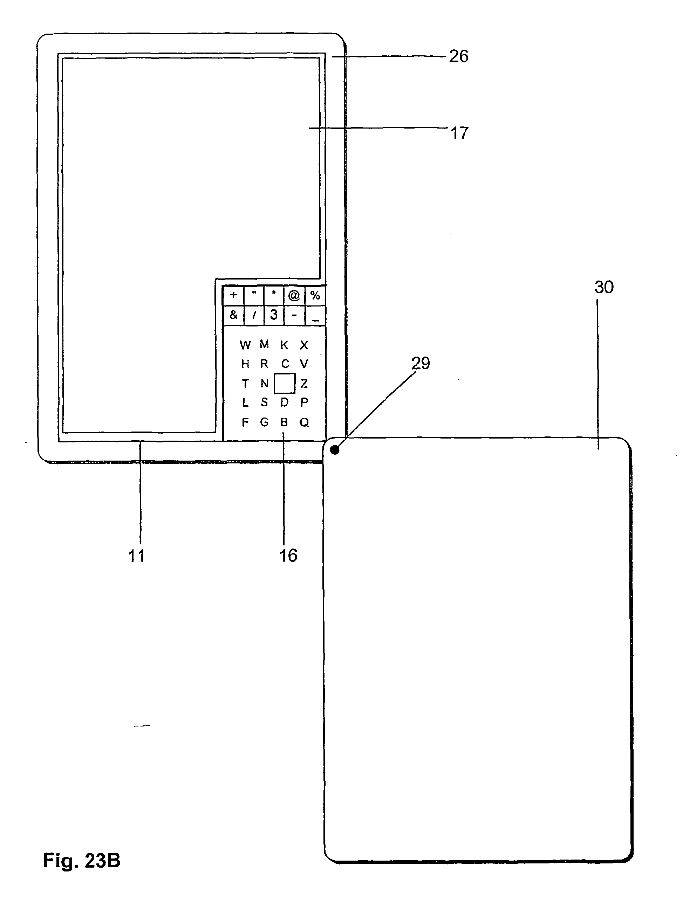

Fig. 23B zeigt ein zweites Ausführungsbeispiel 'Palmtop' mit wegdrehbarem Deckel. Erkennbar sind das Gehäuse 26, der Monitor 11 mit dem Eingabefeld 16 und dem Textfeld 17. In einer der Gehäuseecken ist mittels zum Monitor 11 vertikal angeordneter Drehachse 29 ein Schutzdeckel 30 wegdrehbar und arretierbar befestigt. Er dient somit als bequeme Handauflage. Der Deckel ist um 180 Grad weggeklappt. Bei Verwendung des Geräts im Querformat wird er um 270 Grad weggeklappt und das Tastenfeld(-Fenster) wird mit Vorteil an den oberen Monitorrand verschoben (nicht dargestellt).

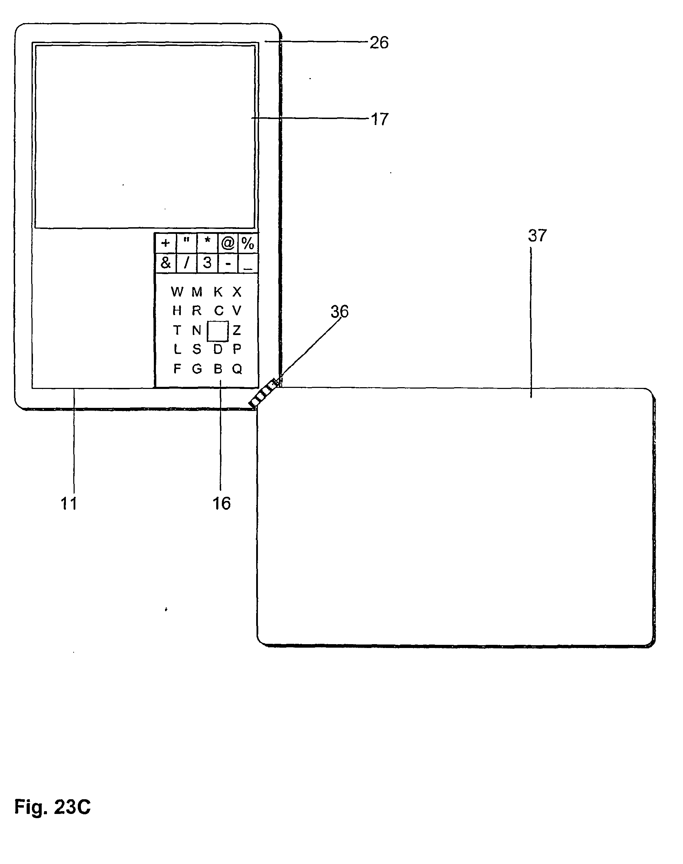

Fig. 23C zeigt ein drittes Ausführungsbeispiel 'Palmtop'. Monitor 11 mit dem Eingabefeld 16 und Textfeld 17 entsprechen der Fig. 23B. Ein Deckel 37 ist wegklappbar und arretierbar und dient somit als bequeme Handauflage. Ein Scharnier 36 ist hierfür in einem Winkel von 40 bis 50 Grad zu den Gehäusekanten angeordnet.

Fig. 24 zeigt als Ausführungsbeispiel eine 'Uhr', bei der das Schnellschreibgerät integriert vorliegt. Am Armband 38 befindet sich das Gehäuse 26 mit Monitor 11 und Eingabefeld 16.
Auf dem Monitor können verschiedene Fenster dargestellt werden, welche diesen in vielen Fällen vollständig ausfüllen, wie dies beim dargestellten Tastenfeld-Fenster der Fall ist. Des weiteren sind ein Fenster für die üblichen und bekannten Uhr-Funktionen, ein Fenster für das Textfeld und je ein Fenster für die Termin- und Adress-Verwaltung u.a.m. vorgesehen. Das Tastenfeld-Fenster wird mit 'Double Tab' auf der X-Taste aufgerufen, was das Erscheinen eines Menüfensters zur Folge hat. Mit 'Tab' auf der 'EXIT'-Taste dieses Menüfensters wird dieses Fenster verlassen. Die anderen Fenster weisen mindestens zwei Tasten auf (vorwärts und rückwärts), mit deren Hilfe durch die Menüfenster navigiert wird.
Während der Eingabe kann die Schreibhand auf dem Handrücken der anderen Hand abgestützt werden, was bequemes Schreiben im Stehen ermöglicht.
Die zusätzliche Integration von Mobiltelefonen in Uhren bietet sich an, da das Schnellschreibgerät zur Eingabe von SMS-Texten optimal geeignet ist.

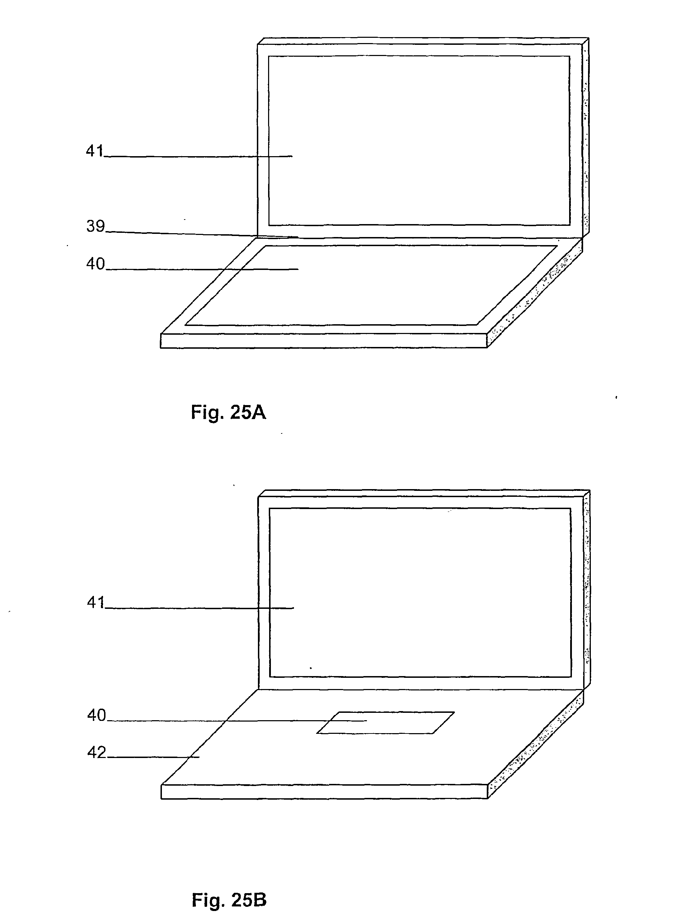

Fig. 25A zeigt ein erstes Ausführungsbeispiel 'Laptop' mit Scharnier 39 und mit zwei aufklappbaren Flächen. Damit wird eine doppelt so grosse Bildschirmfläche erzielt, wobei diese zweiteilige Bildschirmfläche 40, 41 wesentlich günstiger hergestellt werden kann, da bekanntlich mit wachsender Bildschirmgrösse bei der Herstellung die Ausschussraten mehr als linear ansteigen. Wenn die beiden Bildschirme zusammengeklappt sind, sind diese beim Transport geschützt, was sehr vorteilhaft ist.
Verschiedene Varianten der Ausführungen sind hier möglich, wie etwa beide Monitore in Farbe oder ein Monitor in Schwarz/Weiss in einer in Farbe.

Fig. 25B zeigt ein zweites Ausführungsbeispiel ,Laptop' als Variante. Der Monitor 41 ist hier in Farbe gewählt, während der Monitor 40 klein und in Schwarz/Weiss vorgesehen ist, wobei die Anordnung des kleinen Monitors derart gewählt wird, dass viel Platz für die Handauflage 42 gegeben ist. Eine besonders günstige Ausführungsform weist anstelle von Monitor 40 lediglich eine berührungsempfindliche Fläche mit einem aufgedruckten Tastenfeld auf. Eine analoge Formgebung kann auch für Palmtops verwendet werden.

Selbstverständlich können die beschriebenen Laptop-Varianten ohne Nachteile als stationäre Geräte, wie Desktops, verwendet werden.

## Patentansprüche

1. Verfahren für ein Schnellschreibsystem, bei dem mit einem Stift (23) auf einem Touchscreen in einem Eingabefeld (16) und einem darin enthaltenen Tastenfeld (21), das Konsonant-Tasten (22) und eine Vokal-Taste (25) aufweist, eine Eingabe erfolgt, wobei die Eingabe über Mittel der Datenverarbeitung Buchstaben bzw. Buchstabenfolgen, Silben, Worte, Spezialzeichen erzeugt oder Funktionen ausführt, wobei bei der Eingabe
a) der Stift auf einer vorgewählte Taste mindestens einmal abgesetzt und von dieser wieder angehoben wird, oder
b) der Stift auf einer vorgewählten Taste abgesetzt, in einer von acht Strichrichtungen (1 bis 8) als Stiftbewegung geführt wird und danach wieder angehoben wird, und
die Schritte a) und b) wiederholt bzw. kombiniert werden, **dadurch gekennzeichnet, dass** wenn die Eingabe durch Absetzen des Stiftes auf einer Konsonant-Taste, Durchführen einer Stiftbewegung in einer von fünf für die Vokale A, E, I, O, U vorgesehenen Strichrichtungen und Anheben des Stiftes erfolgt, der gewählte Konsonant gefolgt vom zur Strichrichtung gehörenden Vokal oder von einer zur Strichrichtung gehörenden Vokal-Kombination erzeugt wird.

2. Verfahren nach Anspruch 1, **dadurch gekennzeichnet, dass** bei der Eingabe
c) der Stift auf einer vorgewählten Taste abgesetzt, in einer der acht Strichrichtungen (1 bis 8) als Stiftbewegung geführt wird, danach in einer anderen der acht Strichrichtungen (1 bis 8) als Stiftbewegung geführt wird und danach wieder angehoben wird, und
die Schritte a), b) und c) wiederholt bzw. kombiniert werden.

3. Verfahren nach Anspruch 1 oder 2, **dadurch gekennzeichnet, dass** wenn die Eingabe durch Absetzen und Anheben des Stiftes auf einer Konsonant-Taste erfolgt, ein Konsonant erzeugt wird, oder wenn die Eingabe durch Absetzen, Anheben und Absetzen des Stiftes auf einer Konsonant-Taste und Anheben des Stiftes oder durch Absetzen, Anheben und Absetzen des Stiftes auf einer Konsonant-Taste, Durchführen irgendeiner Stiftbewegung und Anheben des Stiftes erfolgt, ein entsprechender Doppel-Konsonant, ein Sonderzeichen oder ein Wort erzeugt werden.

4. Verfahren nach einem der Ansprüche 1 - 3, **dadurch gekennzeichnet, dass** wenn die Eingabe durch Absetzen des Stiftes auf der Vokal-Taste, Durchführen einer Stiftbewegung und Anheben des Stiftes erfolgt, bei Stiftbewegung
- in einer von den fünf für die Vokale A, E, I, O, U vorgesehenen Strichrichtungen der zugeordnete Vokal erzeugt wird,
- in einer sechsten Strichrichtung ein Leerschlag erzeugt bzw. eine Funktion SPACE ausgeführt wird,
- in einer siebten Strichrichtung eine Funktion BACK SPACE ausgeführt wird, oder
- in einer achten Strichrichtung eine Funktion DELETE ausgeführt wird.

5. Verfahren nach einem der Ansprüche 1 - 4, **dadurch gekennzeichnet, dass** wenn die Eingabe durch Absetzen des Stiftes auf der Vokal-Taste oder auf einer Konsonant-Taste, Durchführen einer Stiftbewegung, Anheben des Stiftes erfolgt, bei Stiftbewegung in einer von den fünf für die Vokale A, E, I, O, U vorgesehenen Strichrichtungen, und anschließend - ohne Anheben und wieder Absetzen des Stiftes
- in einer von den fünf für die Vokale A, E, I, O, U vorgesehenen Strichrichtungen Vokale aneinander gereiht werden,
- in einer sechsten Strichrichtung ein Leerschlag erzeugt bzw. eine Funktion SPACE ausgeführt wird,
- in einer siebten Strichrichtung ein Umlaut oder der Buchstabe J oder das Wort ein erzeugt wird, oder
- in einer achten Strichrichtung eine Vokalverdoppelung oder der Buchstabe Y erzeugt wird.

6. Verfahren nach einem der Ansprüche 1 - 5, **dadurch gekennzeichnet, dass** wenn die Eingabe durch Absetzen des Stiftes auf einer Konsonant-Taste, Durchführen einer Stiftbewegung und Anheben des Stiftes erfolgt, bei Stiftbewegung
- in einer sechsten Strichrichtung der gewählte Konsonant in Grossschreibung erzeugt wird, oder
- in einer siebten oder achten Strichrichtung festgelegte oder freikonfigurierbare Buchstabenfolgen, Silben und Wörter erzeugt werden.

7. Verfahren nach einem der Ansprüche 1 - 6, **dadurch gekennzeichnet, dass** wenn die Eingabe durch Absetzen des Stiftes auf der Vokal-Taste, Durchführen einer Stiftbewegung und Anheben des Stiftes erfolgt, bei Stiftbewegung in einer von drei Strichrichtungen nach links-oben, nach oben oder nach rechts-oben eine der Funktionen SPACE, BACK SPACE oder DELETE ausgeführt wird.

8. Verfahren nach einem der Ansprüche 1 - 7, **dadurch gekennzeichnet, dass** wenn die Eingabe durch Absetzen des Stiftes auf einer Konsonant-Taste oder der Vokal-Taste, Durchführen einer Stiftbewegung und Anheben des Stiftes erfolgt, bei Stiftbewegung in einer von drei Strichrichtungen nach links-oben, nach oben oder nach rechts-oben und danach - ohne Anheben und wieder Absetzen des Stiftes - in einer anderen der acht Strichrichtungen festgelegte oder freikonfigurierbare Buchstabenfolgen, Silben und Wörter erzeugt werden.

9. Verfahren nach einem der Ansprüche 1 - 8, **dadurch gekennzeichnet, dass** wenn die Eingabe durch Absetzen, Anheben und Absetzen des Stiftes auf der Vokal-Taste und Anheben des Stiftes, und danach
- durch Absetzen, Anheben und Absetzen des Stiftes auf irgendeiner Taste und Anheben des Stifies, oder
- durch Absetzen, Anheben und Absetzen des Stiftes auf irgendeiner Taste, Durchführen irgendeiner Stiftbewegung und Anheben des Stiftes, oder
- durch Absetzen und Anheben des Stiftes auf irgendeiner Taste, oder
- durch Absetzen des Stiftes auf irgendeiner Taste, Durchführen irgendeiner Stiftbewegung und Anheben des Stiftes erfolgt, festgelegte oder freikonfigurierbare Buchstabenfolgen, Silben und Wörter erzeugt werden.

10. Verfahren nach einem der Ansprüche 1 - 9, **dadurch gekennzeichnet, dass** wenn die Eingabe auf einer Zahlentaste beginnend erfolgt, durch Absetzen und Anheben des Stiftes auf der Zahlentaste die Zahl 0 erzeugt wird, oder durch Absetzen des Stiftes auf der Zahlentaste, Durchführen einer Stiftbewegung in einer von acht Strichrichtungen und Anheben des Stiftes die Zahlen 1 bis 8 erzeugt werden, oder durch Absetzen, Anheben und Absetzen des Stiftes auf der Zahlentaste und Anheben des Stiftes die Zahl 9 erzeugt wird.

11. Verfahren nach einem der Ansprüche 1 - 10, **dadurch gekennzeichnet, dass** wenn die Eingabe ohne Anheben des Stiftes nach einem bereits erzeugten Wort durch Durchführen einer Stiftbewegung in einer von acht Strichrichtungen und Anheben des Stiftes erfolgt, bei Stiftbewegung in einer siebten Strichrichtung das bereits erzeugte Wort durch das gleiche Wort in Fettschrift ersetzt wird, oder bei Stiftbewegung in einer achten Strichrichtung das bereits erzeugte Wort durch das gleiche Wort etwas grösser geschrieben und in Fettschrift als Titel ersetzt wird.

12. Verfahren nach einem der Ansprüche 1 - 11, **dadurch gekennzeichnet, dass** wenn die Eingabe durch Absetzen und Anheben des Stiftes auf einer Q-Taste erfolgt, der Buchstabe Q gefolgt vom Buchstaben U erzeugt wird.

13. Verfahren nach einem der Ansprüche 1 - 12, **dadurch gekennzeichnet, dass** beim Absetzen des Stiftes auf irgendeiner Taste ein Menüfenster zum Auswählen als Neuner-Fenster geöffnet wird, bei dem ein Wort, Wortteil, Buchstabe, eine Buchstabenfolge oder ein Spezialzeichen im Zentrum liegt und acht andere Wörter, Wortteile, Buchstaben, Buchstabenfolgen oder Spezialzeichen rundherum angeordnet sind, sofern dies vom Benutzer als Lernhilfe so gewählt wurde.

14. Verfahren nach Anspruch 13, **dadurch gekennzeichnet, dass** wenn nach dem Aufruf des Neuner-Fensters der Stift in einer von acht Strichrichtungen geführt wird, ein Menüfenster zum Auswählen als Achter-Fenster geöffnet wird, bei dem ein Wort, Wortteil, Buchstabe, eine Buchstabenfolge oder ein Spezialzeichen im Zentrum liegt und sieben andere Wörter, Wortteile, Buchstaben, Buchstabenfolgen oder Spezialzeichen rundherum angeordnet sind.

15. Schnellschreibgerät zur Durchführung des Verfahrens nach einem der Ansprüche 1 - 14, umfassend einen Stift (23), einen Touchscreen mit einer Eingabefläche (10), ein Eingabefeld (16), ein Textfeld (17) und ein Tastenfeld (21), **dadurch gekennzeichnet, dass** der Touchscreen über eine erste Leitung (14) mit einer Rechnereinheit (12) und der Monitor (11) über eine zweite Leitung (15) mit der Rechnereinheit (21) verbunden ist, und dass sich in der Eingabefläche (10) ein in seiner Grösse variables Eingabefeld (16) und ein variables Textfeld (17) befinden, dass im Eingabefeld (16) das Tastenfeld (21) mit einer Vokal-Taste (25) und Konsonant-Tasten (22) angeordnet ist, dass für die Eingabe ein Stift (23) vorgesehen ist und dass für die Verarbeitung der Eingabe ein Eingabemodul (18) und ein Verarbeitungsmodul (20) in der Rechnereinheit (12) mit Speicher (13) und eine Software vorgesehen sind, **dadurch gekennzeichnet, dass** das Schnellschreibsystem dazu eingerichtet ist, eine Eingabe durch Absetzen des Stiftes (23) auf einer Konsonant-Taste (22), Durchführen einer Stiftbewegung in einer von fünf für die Vokale A, E, I, O, U vorgesehenen Strichrichtungen und Anheben des Stiftes (23) zu ermöglichen, wobei der gewählte Konsonant gefolgt vom zur Strichrichtung gehörenden Vokal oder von einer zur Strichrichtung gehörenden Vokal-Kombination erzeugt wird.

16. Schnellschreibgerät nach Anspruch 15, **dadurch gekennzeichnet, dass** das Tastenfeld (21) in seiner Grösse variabel und vorzugsweise 2 x 4 cm gross ist.

17. Schnellschreibgerät nach einem der Ansprüche 15 - 16, **dadurch gekennzeichnet, dass** ein Schutzdeckel (30) wegdrehbar und arretierbar angeordnet ist, und dass der weggedrehte Schutzdeckel (30) als Handauflage für die Hand zur Ausführung von Stiftbewegungen vorgesehen ist.

18. Schnellschreibgerät nach einem der Ansprüche 15 - 17, **dadurch gekennzeichnet, dass** ein Deckel (37) aufklappbar und arretierbar angeordnet ist, und dass der aufgeklappte Deckel (37) als Handauflage für die Hand zur Ausführung von Stiftbewegungen vorgesehen ist.

19. Schnellschreibgerät nach einem der Ansprüche 15 - 18, **dadurch gekennzeichnet, dass** ein Gehäuse als Handauflage ausgebildet ist, das sich links oder rechts und in etwa parallel zum Touchscreen befindet, das bis zu 4 mm oberhalb des Touchscreens liegt und eine Fläche von ca. 9 x 13 cm aufweist.

20. Schnellschreibgerät nach einem der Ansprüche 15 - 19, **dadurch gekennzeichnet, dass** neben dem Monitor (11) eine separate Eingabefläche angeordnet ist, die eine berührungsempfndliche Oberfläche mit einem aufgedruckten oder aufgeklebten Tastenfeld aufweist.

## Claims

1. A method for a high-speed writing system, wherein, by means of a pen (23), an input is executed on a touch screen in an input field (16) and a key field (21) included therein that comprises consonant keys (22) and a vowel key (25), wherein said input, by means of data processing means, generates characters or character sequences, syllables, words, special characters, or carries out functions, wherein, upon input,
a) the pen is put on a preselected key and lifted from it again at least once, or
b) the pen is put on a preselected key, moved in one of eight stroke directions (1 to 8) in a pen movement, and then lifted again, and
steps a) and b) are repeated or combined, **characterized in that,** if the input is carried out by putting down the pen on a consonant key, executing a pen movement in one of five directions provided for the vowels A, E, I, O, U and lifting said pen, the selected consonant is generated followed by the vowel associated with the stroke direction, or by a vowel combination associated with the stroke direction.

2. The method according to claim 1, **characterized in that,** upon input,
c) the pen is put down on a preselected key, moved in one of said eight stroke directions (1 to 8) in a pen movement, and subsequently is lifted again, and
steps a), b), and c) are repeated or combined.

3. The method according to claim 1 or 2, **characterized in that,** if the input is carried out by putting down and lifting said pen on/from a consonant key, a consonant is generated, or, if the input is carried out by putting down, lifting, and putting down said pen on/from a consonant key and lifting said pen, or putting down, lifting, and putting down said pen on/from a consonant key, executing any pen movement, and lifting said pen, a corresponding double consonant, a special character or a word is generated.

4. The method according to one of claims 1 to 3, **characterized in that,** if the input is carried out by putting down said pen on said vowel key, executing a pen movement, and lifting said pen, upon pen movement
- in one of the five stroke directions provided for the five vowels A, E, I, O, U the associated vowel is generated,
- in a sixth stroke direction a space stroke or a SPACE function is carried out,
- in a seventh direction a BACK SPACE function is carried out, or
- in an eighth direction a DELETE function is carried out.

5. The method according to one of claims 1 to 4, **characterized in that,** if the input is carried out by putting down said pen on said vowel key or on a consonant key, executing a pen movement, lifting said pen, upon pen movement in one of the five directions provided for the vowels A, E, I, O, U, and subsequently - without lifting said pen and putting it down again -
- in one of the five stroke directions provided for the vowels A, E, I, O, U vowels are strung together,
- in a sixth stroke direction a space stroke is generated or a SPACE function is carried out,
- in a seventh stroke direction a mutated vowel, or the letter J, or the word "a" is generated, or
- in an eighth stroke direction a double vowel or the letter Y is generated.

6. The method according to one of claims 1 to 5, **characterized in that,** if the input is carried out by putting down said pen on a consonant key, executing a pen movement, and lifting said pen, upon pen movement
- in a sixth stroke direction the selected consonant is generated as a capital character, or
- in a seventh or eighth direction predetermined or freely configurable character sequences, syllables, or words are generated.

7. The method according to one of claims 1 to 6, **characterized in that,** if the input is carried out by putting down said pen on the vowel key, executing a pen movement, and lifting said pen, upon pen movement in one of three stroke directions up and to the left, up, or up and to the right, one of the SPACE, BACKSPACE, or DELETE functions is carried out.

8. The method according to one of claims 1 to 7, **characterized in that,** if the input is carried out by putting down said pen on a consonant key or the vowel key, executing a pen movement, and lifting said pen, upon pen movement in one of three stroke directions up and to the left, up, or up and to the right, and subsequently, without lifting and putting down said pen again, in one of the other eight stroke directions, predetermined or freely configurable character sequences, syllables, and words are generated.

9. The method according to one of claims 1 to 8, **characterized in that,** if the input is carried out by putting down, lifting, and putting down said pen on/from the vowel key, and lifting said pen, and subsequently
- by putting down, lifting, and putting down said pen on any key, and lifting said pen,
- by putting down, lifting, and putting down said pen on any key, executing any pen movement, and lifting said pen, or
- by putting down and lifting said pen on/from any key, or
- by putting down said pen on any key, executing any pen movement, and lifting said pen,
predetermined or freely configurable character sequences, syllables, and words are generated.

10. The method according to one of claims 1 to 9, **characterized in that,** if the input is carried out starting on a number key, the number 0 is generated by putting down and lifting said pen on/from said number key, or the numbers 1 to 8 are generated by putting down said pen on said number key, executing a pen movement in one of eight stroke directions, and lifting said pen, or the number 9 is generated by putting down, lifting, and putting down said pen on said number key, and lifting said pen.

11. The method according to one of claims 1 to 10, **characterized in that,** if the input is carried out without lifting said pen after a word has already been generated by executing a pen movement in one of eight stroke directions, and lifting said pen, upon pen movement in a seventh stroke direction the word that has already been generated is replaced by the same word in boldface, or, upon pen movement in an eighth stroke direction, the word that has already been generated is replaced by the same word in a slightly larger font, in boldface, and as a title.

12. The method according to one of claims 1 to 11, **characterized in that,** if the input is carried out by putting down and lifting said pen on/from a Q key, the letter Q is generated, followed by the letter U.

13. The method according to one of claims 1 to 12, **characterized in that,** upon putting down said pen on any key a menu window for making a selection is opened as a nine-parts window that has a word, a word component, a character, a character sequence, or a special character at its center and eight other words, word components, characters, character sequences, or special characters are disposed around said center, provided this has been selected by the user as a learning aid.

14. The method according to claim 13, **characterized in that,** after accessing said nine-parts window, said pen is moved in one of eight stroke directions, a menu window for selection is opened as an eight-parts window that has a word, a word component, a character, a character sequence, or a special character at its center and seven other words, word components, characters, character sequences, or special characters are disposed around said center.

15. A high-speed writing device for carrying out the method according to one of claims 1 to 14, comprising a pen (23), a touch screen having an input area (10), an input field (16), a text field (17), and a key field (21), **characterized in that** said touch screen is connected to a processing unit (12) via a first line (14), and said monitor (11) is connected to the processing unit (21) via a second line (15), and **in that** the input area (10) includes an input field (16) variable with respect to its size and a variable text field (17), **in that** the key field (21) in the input field (16) has a vowel key (25) and consonant keys (22), **in that** a pen for inputting is provided, and **in that**, for processing the input, an input module (18) and a processing module (20) are provided in the processing unit (12) with a memory (13) and a software, **characterized in that** said high-speed writing system is adapted to enable an input by putting down said pen (23) on a consonant key (22), executing a pen movement in one of five stroke directions provided or the vowels A, E, I, O, U, and lifting said pen (23), wherein the selected consonant is followed by the vowel associated with the stroke direction, or by a vowel combination associated with the stroke direction.

16. The high-speed writing device according to claim 15, **characterized in that** the size of the key field (21) is variable and preferably has a size of 2 x 4 cm.

17. The high-speed writing device according to one of claims 15 to 16, **characterized in that** a protective lid (30) is provided that can be turned away and that is lockable, and **in that** the protective lid (30), when turned away, is provided as a hand rest for the hand for executing pen movements.

18. The high-speed writing device according to one of claims 15 to 17, **characterized in that** a lid (37) is provided that can be raised and that is lockable, and **in that** the raised lid (37) is provided as a hand rest for the hand for executing pen movements.

19. The high-speed writing device according to one of claims 15 to 18, **characterized in that** a housing is formed as a hand rest that is located to the left or to the right of said touch screen and approximately parallel to it, that is up to 4 mm above said touch screen, and that has an area of approximately 9 x 13 cm.

20. The high-speed writing device according to one of claims 15 to 19, **characterized in that** a separate input area is provided next to said monitor (11) that has a touch-sensitive surface with an imprinted or affixed key field.

## Revendications

1. Procédé pour un système d'écriture rapide, dans lequel une saisie est effectuée avec un stylet (23) sur un écran tactile dans une zone de saisie (16) et une zone de touches (21) contenue dans celle-ci et présentant des touches de consonne (22) et une touche de voyelle (25), dans lequel la saisie génère par des moyens de traitement de données des lettres ou des suites de lettres, des syllabes, des mots, des caractères spéciaux ou exécute des fonctions, dans lequel lors de la saisie
a) le stylet est posé au moins une fois sur une touche présélectionnée et de nouveau enlevé de celle-ci, ou
b) le stylet est posé sur une touche présélectionnée, amené dans l'une de huit directions de trait (1 à 8) en tant que mouvement de stylet et est ensuite de nouveau enlevé, et
les étapes a) et b) sont répétées ou combinées, **caractérisé en ce que** lorsque la saisie est effectuée en posant le stylet sur une touche de consonne, en exécutant un mouvement de stylet dans l'une de cinq directions de trait prévues pour les voyelles A, E, I, O, U et en enlevant le stylet, la consonne sélectionnée suivie de la voyelle associée à la direction de trait ou d'une combinaison de voyelles associée à la direction de trait est générée.

2. Procédé selon la revendication 1, **caractérisé en ce que** lors de la saisie
c) le stylet est posé sur une touche présélectionnée, amené dans l'une de huit directions de trait (1 à 8) en tant que mouvement de stylet, ensuite amené dans une autre des huit directions de trait (1 à 8) en tant que mouvement de stylet, et ensuite de nouveau enlevé, et les étapes a), b) et c) sont répétées ou combinées.

3. Procédé selon la revendication 1 ou 2, **caractérisé en ce que** lorsque la saisie est effectuée en posant et enlevant le stylet sur une touche de consonne, une consonne est générée, ou lorsque la saisie est effectuée en posant, enlevant et posant le stylet sur une touche de consonne et en enlevant le stylet ou en posant, enlevant et posant le stylet sur une touche de consonne, en exécutant un mouvement de stylet quelconque et en enlevant le stylet, une double consonne correspondante, un caractère spécial ou un mot est généré(e).

4. Procédé selon l'une quelconque des revendications 1 à 3, **caractérisé en ce que** lorsque la saisie est effectuée en posant le stylet sur la touche de voyelle, en exécutant un mouvement de stylet et en enlevant le stylet, pour un mouvement de stylet
- dans l'une de cinq directions de trait prévues pour les voyelles A, E, I, O, U, la voyelle associée est générée,
- dans une sixième direction de trait, un espace est généré ou une fonction SPACE est exécutée,
- dans une septième direction de trait, une fonction BACK SPACE est exécutée, ou
- dans une huitième direction de trait, une fonction DELETE est exécutée.

5. Procédé selon l'une quelconque des revendications 1 à 4, **caractérisé en ce que** lorsque la saisie est effectuée en posant le stylet sur la touche de voyelle ou sur une touche de consonne, en exécutant un mouvement de stylet, en enlevant le stylet, pour un mouvement de stylet dans l'une de cinq directions de trait prévues pour les voyelles A, E, I, O, U, et ensuite - sans enlever ni reposer le stylet -
- dans l'une de cinq directions de trait prévues pour les voyelles A, E, I, O, U, des voyelles sont enchaînées,
- dans une sixième direction de trait, un espace est généré ou une fonction SPACE est exécutée,
- dans une septième direction de trait, une voyelle infléchie ou la lettre J ou le mot un est généré(e), ou
- dans une huitième direction de trait, un doublement de voyelle ou la lettre Y est généré(e).

6. Procédé selon l'une quelconque des revendications 1 à 5, **caractérisé en ce que** lorsque la saisie est effectuée en posant le stylet sur une touche de consonne, en exécutant un mouvement de stylet et en enlevant le stylet, pour un mouvement de stylet
- dans une sixième direction de trait, la consonne sélectionnée est générée en majuscule, ou
- dans une septième ou huitième direction de trait, des suites de lettres, des syllabes ou des mots, déterminés ou configurables librement, sont générés.

7. Procédé selon l'une quelconque des revendications 1 à 6, **caractérisé en ce que** lorsque la saisie est effectuée en posant le stylet sur la touche de voyelle, en exécutant un mouvement de stylet et en enlevant le stylet, pour un mouvement de stylet dans l'une de trois directions de trait en haut à gauche, en haut ou en haut à droite, l'une des fonctions SPACE, BACK SPACE ou DELETE est exécutée.

8. Procédé selon l'une quelconque des revendications 1 à 7, **caractérisé en ce que** lorsque la saisie est effectuée en posant le stylet sur une touche de consonne ou la touche de voyelle, en exécutant un mouvement de stylet et en enlevant le stylet, pour un mouvement de stylet dans l'une de trois directions de trait en haut à gauche, en haut ou en haut à droite, et ensuite - sans relever ni reposer le stylet - dans une autre des huit directions de trait, des suites de lettres, des syllabes ou des mots, déterminés ou configurables librement, sont générés.

9. Procédé selon l'une quelconque des revendications 1 à 8, **caractérisé en ce que** lorsque la saisie est effectuée en posant, enlevant et posant le stylet sur la touche de voyelle et en enlevant le stylet, et ensuite
- en posant, enlevant et posant le stylet sur une touche quelconque et en enlevant le stylet, ou
- en posant, enlevant et posant le stylet sur une touche quelconque, en exécutant un mouvement de stylet quelconque et en enlevant le stylet, ou
- en posant et enlevant le stylet sur une touche quelconque, ou
- en posant le stylet sur une touche quelconque, en exécutant un mouvement de stylet quelconque et en enlevant le stylet,
des suites de lettres, des syllabes ou des mots, déterminés ou configurables librement, sont générés.

10. Procédé selon l'une quelconque des revendications 1 à 9, **caractérisé en ce que** lorsque la saisie est effectuée en commençant par une touche numérique, en posant et en enlevant le stylet sur la touche numérique, le chiffre 0 est généré, ou en posant le stylet sur la touche numérique, en exécutant un mouvement de stylet dans l'une de huit directions de trait et en enlevant le stylet, les chiffres 1 à 8 sont générés, ou en posant, en enlevant et en posant le stylet sur la touche numérique et en enlevant le stylet, le chiffre 9 est généré.

11. Procédé selon l'une quelconque des revendications 1 à 10, **caractérisé en ce que** lorsque la saisie est effectuée sans enlever le stylet, suite à un mot déjà généré, en exécutant un mouvement de stylet dans l'une de huit directions de trait et en enlevant le stylet, pour un mouvement de stylet dans une septième direction de trait, le mot déjà généré est remplacé par le même mot en gras, ou pour un mouvement de stylet dans une huitième direction de trait, le mot déjà généré est remplacé par le même mot écrit un peu plus grand et en gras comme un titre.

12. Procédé selon l'une quelconque des revendications 1 à 11, **caractérisé en ce que** lorsque la saisie est effectuée en posant et enlevant le stylet sur une touche Q, la lettre Q suivie de la lettre U est générée.

13. Procédé selon l'une quelconque des revendications 1 à 12, **caractérisé en ce que** lorsque le stylet est posé sur une touche quelconque, une fenêtre de menu pour une sélection est ouverte comme une fenêtre à neuf éléments dans laquelle un mot, une partie de mot, une lettre, une suite de lettres ou un caractère spécial se trouve au milieu, et huit autre mots, parties de mot, lettres, suites de lettre ou caractères spéciaux sont disposés tout autour, dans la mesure où l'utilisateur en a décidé ainsi comme aide à l'apprentissage.

14. Procédé selon la revendication 13, **caractérisé en ce que** lorsqu'après l'appel de la fenêtre à neuf éléments, le stylet est amené dans l'une de huit directions de trait, une fenêtre de menu pour une sélection est ouverte comme une fenêtre à huit éléments dans laquelle un mot, une partie de mot, une lettre, une suite de lettres ou un caractère spécial se trouve au milieu, et sept autres mots, parties de mot, lettres, suites de lettres ou caractères spéciaux sont disposés tout autour.

15. Appareil d'écriture rapide pour réaliser le procédé selon l'une quelconque des revendications précédentes 1 à 14, comprenant un stylet (23), un écran tactile avec une surface de saisie (10), une zone de saisie (16), une zone de texte (17) et une zone de touches (21), **caractérisé en ce que** l'écran tactile est relié par l'intermédiaire d'une première ligne (14) à une unité de calcul (12), et l'écran (11) est relié par l'intermédiaire d'une deuxième ligne (15) à l'unité de calcul (21), et **en ce que** dans la surface de saisie (10) se trouvent une zone de saisie (16) de dimension variable et une zone de texte (17) variable, **en ce que** dans la zone de saisie (16), la zone de touches (21) est disposée avec une touche de voyelle (25) et des touches de consonne (22), **en ce qu'**un stylet (23) est prévu pour la saisie, et **en ce que** pour le traitement de la saisie, un module de saisie (18) et un module de traitement (20) dans l'unité de calcul (12) avec une mémoire (13) et un logiciel sont prévus, **caractérisé en ce que** le système d'écriture rapide est aménagé pour permettre une saisie en posant le stylet (23) sur une touche de consonne (22), en exécutant un mouvement de stylet dans l'une de cinq directions de trait prévues pour les voyelles A, E, I, O, U et en enlevant le stylet (23), dans lequel la consonne sélectionnée, suivie de la voyelle associée à la direction de trait ou d'une combinaison de voyelles associée à la direction de trait, est générée.

16. Appareil d'écriture rapide selon la revendication 15, **caractérisé en ce que** la zone de touches (21) est de dimension variable et mesure de préférence 2 x 4 cm.

17. Appareil d'écriture rapide selon l'une quelconque des revendications 15 et 16, **caractérisé en ce qu'**un cache de protection (30) est disposé de façon à pouvoir être écarté et bloqué, et **en ce que** le cache de protection (30) écarté est prévu comme repose-main pour la main en vue de l'exécution de mouvements de stylet.

18. Appareil d'écriture rapide selon l'une quelconque des revendications 15 à 17, **caractérisé en ce qu'**un couvercle (37) est disposé de façon à pouvoir être relevé et bloqué, et **en ce que** le couvercle relevé (37) est prévu comme repose-main pour la main en vue de l'exécution de mouvements de stylet.

19. Appareil d'écriture rapide selon l'une quelconque des revendications 15 à 18, **caractérisé en ce qu'**un boîtier est réalisé comme repose-main, ledit boîtier se trouvant à gauche ou à droite de, et approximativement en parallèle à l'écran tactile, se trouvant jusqu'à 4 mm au-dessus de l'écran tactile et présentant une surface d'environ 9 x 13 cm.

20. Appareil d'écriture rapide selon l'une quelconque des revendications 15 à 19, **caractérisé en ce qu'**à côté de l'écran (11), une surface de saisie séparée est disposée qui présente une surface tactile avec une zone de touches surimprimée ou collée.
